# EUROPEAN PATENT APPLICATION

(11) **EP 4 597 955 A1**
(43) Date of publication of application: **06.08.2025**
(21) Application number: 22960317.0
(22) Date of filing: 30.09.2022
(51) Int. Cl.: H04L 27/00

(54) **COMMUNICATION METHOD AND APPARATUS, AND DEVICE, STORAGE MEDIUM, CHIP, PRODUCT AND PROGRAM**

(71) Applicant: GUANGDONG OPPO MOBILE TELECOMMUNICATIONS CORP., LTD., Dongguan, Guangdong 523860 (CN)
(72) Inventor: GUO, Yali, Dongguan, Guangdong 523860 (CN); LU, Fei, Dongguan, Guangdong 523860 (CN); YANG, Haorui, Dongguan, Guangdong 523860 (CN)
(74) Representative: Grassi, Stefano
(86) International application number: PCT/CN2022/123330
(87) International publication number: WO 2024/065698

(57) **Abstract**

Provided in the embodiments of the present application are a communication method and apparatus, and a device, a storage medium, a chip, a product and a program. The method comprises: a terminal device receiving an operation request for at least one electronic tag and/or identification information of the at least one electronic tag, which operation request and/or identification information is sent by a first network element; and the terminal device executing an operation for the at least one electronic tag.

## Description

### TECHNICAL FIELD

Embodiments of the present disclosure relate to the technical field of mobile communications, and particularly to a communication method, an apparatus, a device, a storage medium, a chip, a product and a program.

### BACKGROUND

Electronic tags may be applied to local management and communication of items. Generally, a distance between a passive electronic tag and a reader-writer is about 1 meter, and a distance between an active electronic tag and a reader-writer is about 100 meters. Therefore, it is inconvenient to perform operation on the electronic tag remotely.

### SUMMARY

The embodiments of the present disclosure provide a communication method, an apparatus, a device, a storage medium, a chip, a product and a program.

In a first aspect, there is provided a communication method in an embodiment of the present disclosure, the method includes the following operations.

A terminal device receives, from a first network element, identification information of at least one electronic tag and/or an operation request for the at least one electronic tag.

The terminal device performs an operation on the at least one electronic tag.

In a second aspect, there is provided a communication method in an embodiment of the present disclosure, the method includes the following operations.

A first network element receives, from a second network element or a third network element, a terminal device identification, and identification information of at least one electronic tag and/or an operation request for the at least one electronic tag.

The first network element sends, to a terminal device corresponding to the terminal device identification, the operation request and/or the identification information of the at least one electronic tag.

In a third aspect, there is provided a communication method in an embodiment of the present disclosure, the method includes the following operations.

A second network element receives, from a third network element, identification information of at least one electronic tag and/or an operation request for the at least one electronic tag.

The second network element determines a terminal device associated with the at least one electronic tag.

In a fourth aspect, there is provided a communication method in an embodiment of the present disclosure, the method includes the following operations.

A third network element receives, from an application function (AF) entity, identification information of at least one electronic tag and/or an operation request for the at least one electronic tag.

The third network element sends, to a second network element, the operation request and/or the identification information of the at least one electronic tag, or the third network element determines a terminal device associated with the at least one electronic tag.

In a fifth aspect, there is provided a communication apparatus in an embodiment of the present disclosure, the apparatus includes a communication unit and a performing unit.

The communication unit is used to receive, from a first network element, identification information of at least one electronic tag and/or an operation request for the at least one electronic tag.

The performing unit is used to perform an operation on the at least one electronic tag.

In a sixth aspect, there is provided a communication apparatus in an embodiment of the present disclosure, the apparatus includes a communication unit.

The communication unit is used to receive, from a second network element or a third network element, a terminal device identification, and identification information of at least one electronic tag and/or an operation request for the at least one electronic tag.

The communication unit is further used to send, to a terminal device corresponding to the terminal device identification, the operation request and/or the identification information of the at least one electronic tag.

In a seventh aspect, there is provided a communication apparatus in an embodiment of the present disclosure, the apparatus includes a communication unit and a determination unit.

The communication unit is used to receive, from a third network element, identification information of at least one electronic tag and/or an operation request for the at least one electronic tag.

The determination unit is used to determine a terminal device associated with the at least one electronic tag.

In an eighth aspect, there is provided a communication apparatus in an embodiment of the present disclosure, the apparatus includes a communication unit.

The communication unit is used to receive identification information of at least one electronic tag and/or an operation request for the at least one electronic tag from an application function (AF) entity.

The communication unit is further used to send the operation request and/or the identification information of the at least one electronic tag to a second network element; or the communication apparatus further includes a determination unit, used to determine a terminal device associated with the at least one electronic tag.

In a ninth aspect, there is provided a communication device in an embodiment of the present disclosure, the communication device includes a processor and a memory.

A computer program executable by the processor is stored on the memory.

The processor, when executing the program, performs the method in the first aspect, the second aspect, the third aspect or the fourth aspect.

In a tenth aspect, there is provided a computer storage medium in an embodiment of the present disclosure, the computer storage medium stores one or more programs executable by one or more processors that, when executing the one or more programs, perform the method in the first aspect, the second aspect, the third aspect or the fourth aspect.

In an eleventh aspect, there is provided a chip in an embodiment of the present disclosure. The chip includes a processor used to call a computer program from a memory and run the computer program, to perform the method in the first aspect, the second aspect, the third aspect or the fourth aspect.

In a twelfth aspect, there is provided a computer program product in an embodiment of the present disclosure. The computer program product includes a computer storage medium storing a computer program. The computer program includes instructions executable by at least one processor that, when executing the instructions, performs the method in the first aspect, the second aspect, the third aspect or the fourth aspect.

In a thirteenth aspect, there is provided a computer program in an embodiment of the present disclosure. The computer program causes a computer to perform the method in the first aspect, the second aspect, the third aspect or the fourth aspect.

In the embodiments of the present disclosure, the terminal device receives the identification information of the at least one electronic tag and/or the operation request for the at least one electronic tag from the first network element; and the terminal device performs the operation on the at least one electronic tag. In such way, the terminal device can perform the operation on the at least one electronic tag based on the information of the at least one electronic tag sent by the first network element, thereby enabling a remote operation on the electronic tag, and broadening an application range of the electronic tag.

### BRIEF DESCRIPTION OF THE DRAWINGS

The accompanying drawings, which are illustrated herein, provide further understanding of the disclosure and constitute a part of this disclosure. The exemplary embodiments of the disclosure and their description are used to explain the disclosure and not to unduly limit the disclosure. In the drawings:
FIG. 1 is a schematic diagram of an application scenario in an embodiment of the present disclosure.
FIG. 2 is a schematic diagram of a system architecture based on a reference point presentation manner provided in an embodiment of the disclosure.
FIG. 3 is a schematic flowchart of a communication method provided in an embodiment of the disclosure.
FIG. 4 is a schematic flowchart of another communication method provided in an embodiment of the disclosure.
FIG. 5 is a schematic flowchart of yet another communication method provided in an embodiment of the disclosure.
FIG. 6 is a schematic flowchart of still yet another communication method provided in an embodiment of the disclosure.
FIG. 7 is a schematic flowchart of a communication method provided in another embodiment of the disclosure.
FIG. 8 is a schematic flowchart of a communication method provided in yet another embodiment of the disclosure.
FIG. 9 is a schematic flowchart of a communication method provided in still yet another embodiment of the disclosure.
FIG. 10 is a schematic flowchart of another communication method provided in another embodiment of the disclosure.
FIG. 11 is a schematic flowchart of yet another communication method provided in another embodiment of the disclosure.
FIG. 12 is a schematic flowchart of still yet another communication method provided in another embodiment of the disclosure.
FIG. 13 is a schematic diagram of structural composition of a communication apparatus provided in an embodiment of the disclosure.
FIG. 14 is a schematic diagram of structural composition of another communication apparatus provided in an embodiment of the disclosure.
FIG. 15 is a schematic diagram of structural composition of yet another communication apparatus provided in an embodiment of the disclosure.
FIG. 16 is a schematic diagram of structural composition of still yet another communication apparatus provided in an embodiment of the disclosure.
FIG. 17 is a schematic structural diagram of a communication device provided in an embodiment of the present disclosure.
FIG. 18 is a schematic structural diagram of a chip according to an embodiment of the disclosure.

### DETAILED DESCRIPTION

The technical solutions in the embodiments of this disclosure will be described with reference to the accompanying drawings in the embodiments of the disclosure. It is apparent that the described embodiments are some embodiments of the disclosure rather than all of the embodiments. All other embodiments obtained by a person of ordinary skill in the art based on the embodiments of the disclosure without paying inventive efforts shall fall within the scope of protection of the disclosure.

The technical solutions described in the embodiments of the present disclosure may be combined arbitrarily with each other, provided that they do not conflict with each other. In the description of the present disclosure, the term "multiple" means two or more, unless otherwise explicitly and specifically defined.

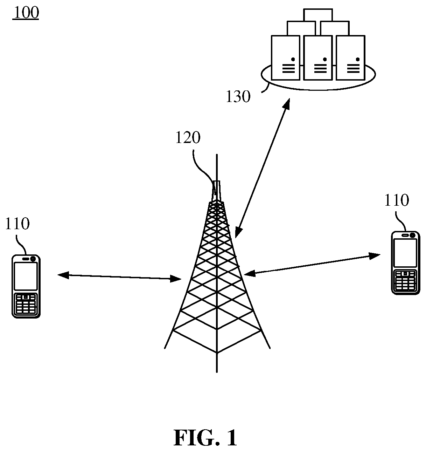

FIG. 1 is a schematic diagram of an application scenario in an embodiment of the present disclosure. As illustrated in FIG. 1, a communication system 100 may include a terminal device 110, an access network device 120 and a core network device 130. The access network device 120 may communicate with the terminal device 110 via an air interface. Multi-service transmission is supported between the terminal device 110 and the access network device 120.

It should be understood that the embodiments of the disclosure are illustrated with reference to the communication system 100 only, but the embodiments of the disclosure are not limited thereto. In other words, the technical solution of the embodiments of the disclosure may be applied to various communication systems, such as a long term evolution (LTE) system, an LTE time division duplex (TDD) system, a universal mobile telecommunications system (UMTS), an Internet of things (IoT) system, a narrow band Internet of things (NB-IoT) system, an enhanced machine-type communications (eMTC) system, a 5-th generation (5G) communication system (also called a new radio (NR) communication system), or a future communication system (such as a 6G or a 7G communication system), etc.

The access network device 120 may provide communication coverage to a particular geographic area, and may communicate with the terminal device 110 (such as user equipment (UE)) located within the coverage area.

Various functional units in the communication system 100 may also be connected with each other through a next generation (NG) interface to realize communication.

For example, the terminal device may establish an air interface connection with the access network device through an NR interface, to send user plane data and a control plane signaling. The terminal device may establish a control plane signaling connection with an access and mobility management function (AMF) through an NG interface 1 (N1 for short). The access network device such as a next generation radio access base station (gNB) may establish a user plane data connection with a user plane function (UPF) through an NG interface 3 (N3 for short). The access network device may establish a control plane signaling connection with the AMF through an NG interface 2 (N2 for short). The UPF may establish a control plane signaling connection with a session management function (SMF) through an NG interface 4 (N4 for short). The UPF may interact user plane data with a data network through an NG interface 6 (N6 for short). The AMF may establish a control plane signaling connection with the SMF through an NG interface 11 (N11 for short). The SMF may establish a control plane signaling connection with a policy control function (PCF) through an NG interface 7 (N7 for short).

FIG. 1 illustrates one base station, one core network device and two terminal devices as an example. Optionally, the wireless communication system 100 may include multiple base stations and the coverage of each base station may include other numbers of terminal devices, which is not limited in the embodiment of the disclosure.

It should be noted that FIG. 1 illustrates the system to which the disclosure is applicable by way of example only, and the methods illustrated in the embodiments of the disclosure may also be applicable to other systems. Moreover, the terms "system" and "network" are usually interchangeably used in the disclosure. The term "and/or" herein is only used to describe an association relationship between the associated objects, and represents that three relationships may exist. For example, A and/or B may represent the three conditions: independent existence of A, existence of both A and B and independent existence of B. In addition, the character "/" in the disclosure usually represents that previous and next associated objects form an "or" relationship It should also be understood that the term "indication" mentioned in the embodiments of the disclosure may be a direct indication or an indirect indication, and may also be indicative of an associated relationship. For example, A indicates B, which may represent that A directly indicates B, for example, B may be obtained through A; or that A indirectly indicates B, for example, A indicates C, and B may be obtained through C; or that there is an association between A and B. It should also be understood that the term mentioned "correspondence" in the embodiments of the present disclosure may indicate a direct or indirect correspondence between associated objects, or indicate an association relationship between the objects, or a relationship of indicating and being indicated, configuring and being configured, etc. It should also be understood that the phrase "predefining", "defined in a protocol", "predetermining" or "predefined rule" mentioned in the embodiments of the disclosure may be implemented by pre-storing corresponding codes, or tables in devices (such as terminal devices and network devices), or by other means that may be used for indicating relevant information, the specific implementation of which is not limited in the present disclosure. For example, predefinition may mean that it is defined in the protocol. It should also be understood that, in the embodiments of the disclosure, the "protocol" may be a standard protocol in the communication field, such as an LTE protocol, an NR protocol, and related protocols to be applied in a future communication system, which are not limited herein.

The terminal device in the embodiments of the disclosure may be referred to as UE, a mobile station (MS), a mobile terminal (MT), a subscriber unit, a subscriber station, a mobile console, a remote station, a remote terminal, a mobile device, a user terminal, a terminal, a wireless communication device, a user agent, or a user apparatus. The terminal device may include one or a combination of at least two of the following devices: a reader-writer, a device including a reader-writer, a device with a function of a reader-writer, an IoT device, a satellite terminal, a wireless local loop (WLL) station, a personal digital assistant (PDA), a handheld device with a wireless communication function, a computing device or another processing device connected to a wireless modem, a server, a mobile phone, a Pad, a computer with a wireless transceiver function, a handheld computer, a desktop computer, a PDA, a portable media player, a smart speaker, a navigation device, a wearable device such as a smart watch, smart glasses, a smart necklace, a pedometer, a digital television (TV), a virtual reality (VR) terminal device, an augmented reality (AR) terminal device, a wireless terminal in industrial control, a wireless terminal in self driving, a wireless terminal in remote medical surgery, a wireless terminal in a smart grid, a wireless terminal in transportation safety, a wireless terminal in a smart city, a wireless terminal in a smart home, a vehicle, an in-vehicle device, an in-vehicle module in an Internet of vehicle, a wireless modem, a handheld device, a customer premise equipment (CPE), a smart home appliance, etc.

Optionally, the terminal device may be any terminal device including but not limited to: a terminal device connected to the access network device or other terminal devices via a wired or wireless connection.

Optionally, the terminal device may be applied to a device to device (D2D) communication.

The access network device may include one of or a combination of at least two of the following devices: an evolutional node B (eNB or eNodeB) in an LTE system, a next generation radio access network (NG RAN) device, a base station in an NR system (gNB), a small station, a micro station, a wireless controller in a cloud radio access network (CRAN), an access point in WiFi, a transmission reception point (TRP), a relay station, an access point, an in-vehicle device, a wearable device, a hub, a switch, a bridge, a router, a network device in a future evolved public land mobile network (PLMN) or the like.

The core network device may be a 5G core (5GC) device, and the core network device may include one of or a combination of at least two of: an AMF, an authentication server function (AUSF), a UPF, an SMF, a location management function (LMF), or a PCF. In some other implementations, the core network device may also be an evolved packet core (EPC) device in the LTE network, for example, an SMF + core packet gateway (SMF + PGW-C) device. It should be understood that the SMF + PGW-C may achieve functions that can be achieved by both the SMF and PGW-C. In a process of network evolution, the core network may also be called by other names, or the functions of the core network may be divided to form a new network entity, which is not limited by the embodiments of the disclosure.

In order to facilitate the understanding of the technical solution of the embodiments of the disclosure, related technologies for the embodiments of the disclosure will be described below. The following related technologies may be used as optional solutions and may be arbitrarily combined with the technical solutions of in the embodiments of the disclosure, and the combinations fall within the scope of protection of the embodiments of the disclosure.

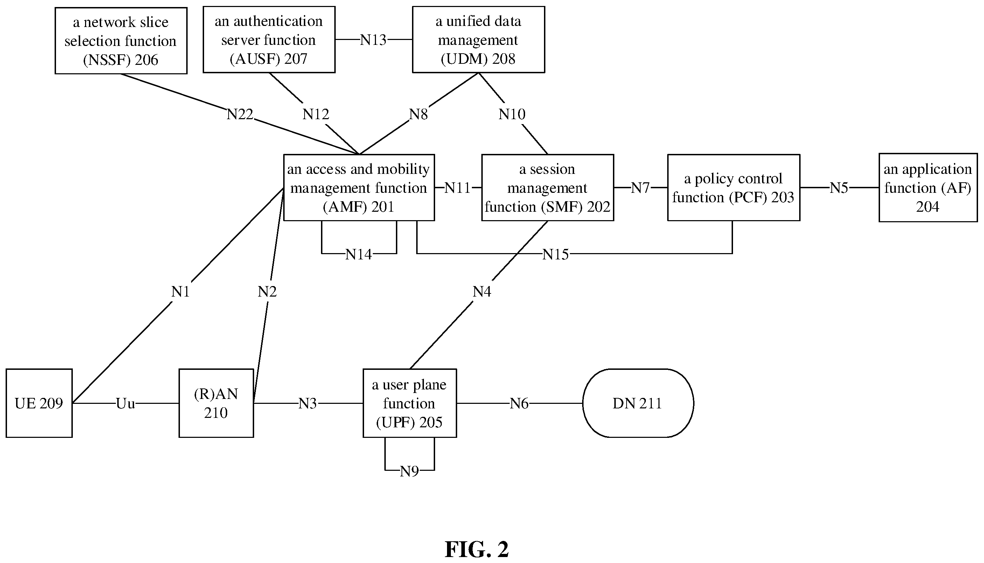

FIG. 2 is a schematic diagram of a system architecture based on a reference point presentation manner provided in an embodiment of the disclosure. As illustrated in FIG. 2, the reference point presentation manner may illustrate that interactions may be present between network function (NF) services. For example, the NFs may include: an AMF 201, an SMF 202, a PCF 203, an AF 204, a UPF 205, a network slice selection function (NSSF) 206, an AUSF 207, and a unified data management (UDM) 208, and so on. The system may also include a UE 209, a radio access network (RAN) or an access node (AN) 210, and a data network (DN) 211.

FIG. 2 illustrates the following reference points: N1 (between the UE 209 and the AMF 201), N2 (between the RAN 210 and the AMF 201), N3 (between the RAN 210 and the UPF 205), N4 (between the SMF 202 and the UPF 205), N5 (between the PCF 203 and the AF 204), N6 (between the UPF 205 and the DN 211), N7 (between the SMF 202 and the PCF 203), N8 (between the UDM 208 and the AMF 201), N9 (between two UPFs 205), N10 (between the UDM 208 and the SMF 202), N11 (between the AMF 201 and the SMF 202), N12 (between the AUSF 207 and the AMF 201), N13 (between the AUSF 207 and the UDM 208), N14 (between two AMFs 201), N15 (between the PCF 203 and the AMF 201 in a non-roaming case, or between the PCF 203, a visited network and the AMF 201 in a roaming case), N16 (between two SMFs, not illustrated), and N22 (between the AMF 201 and the NSSF 206).

The SMF, the PCF, and the AF will be described below.

SMF: the SMF includes a session establishment, modification and release, a tunnel maintenance between the UPF and AN nodes, an allocation and management of terminal Internet protocol (IP) addresses, selection and control of UPF functions, a billing data collection and billing interface support, etc.

PCF: the PCF supports a unified policy framework for managing network behaviors and provides an operator network control policy to other network elements and terminals.

AF: the AF may be an internal application of an operator, such as an IP multimedia subsystem (IMS), or a third-party service such as a web service, a video or a game, etc. If the AF is an internal application of the operator and is in a same trusted domain as other NFs, the AF directly interacts with and accesses other NFs. If the AF is not in the trusted domain, a network exposure function (NEF) is required to access other NFs.

The UE performs an access stratum (AS) connection with the AN through a Uu interface to exchange access stratum messages and perform wireless data transmissions, and the UE performs a non-access stratum (NAS) connection with the AMF through the N1 interface to exchange NAS messages. The AMF is a mobility management function in a core network, and the SMF is a session management function in the core network. In addition to performing the mobility management for the UE, the AMF is also responsible for forwarding messages related to the session management between the UE and the SMF. The PCF is a policy management function in the core network, and is responsible for formulating policies related to the mobility management, the session management, the billing, etc., for UE. The UPF is a user plane function in the core network, and the UPF transmits data to an external data network through the N6 interface and transmits data to the AN through the N3 interface.

In a radio frequency identification (RFID) system, a reader-writer is a device that reads out information in an electronic tag or writes information into the electronic tag. The reader-writer sends a radio frequency energy in an area to form an electromagnetic field when the RFID system is operating, and a size of the area depends on a transmission power. The electronic tag within a coverage area of the reader-writer is triggered, to sends data stored in the electronic tag or modify the data stored in the electronic tag according to an instruction of the reader-writer. A non-contact two-way data communication is performed between the reader-writer and the electronic tag through a wireless radio frequency manner, and the reader-writer performs reading and writing for the electronic tag, so as to achieve a purpose of target identification and data exchange. The electronic tag generally consumes less electricity, and even does not need to be connected to a power supply or a battery. For example, a passive electronic tag can supply a power to itself temporarily by receiving a microwave signal transmitted from the reader-writer and obtaining energy through electromagnetic induction coils, thereby completing information exchange. The RFID has a short transmission range and is applied to the local management and communication of items, such as inventory management in warehouses, file management, access card management or electronic highway payment.

The 3rd generation partnership project (3GPP) network also considers design of an electronic tag with a new type, which is called a passive IoT tag or an ambient IoT tag. Unlike RFID, the electronic tag with the new type can perform communications by using frequency resources in the 3GPP network. The electronic tag in the disclosure includes, but is not limited to, an RFID tag, a passive IoT tag, or an ambient IoT tag.

For convenience of understanding of the technical solutions of the embodiments of the disclosure, the technical solutions in the disclosure are described below through detailed embodiments. The above related technologies used as optional solutions may be combined with the technical solutions of the embodiments of the disclosure in various ways, and the combinations fall within the scope of the embodiments of the disclosure. The embodiments of the disclosure include at least part of the following contents.

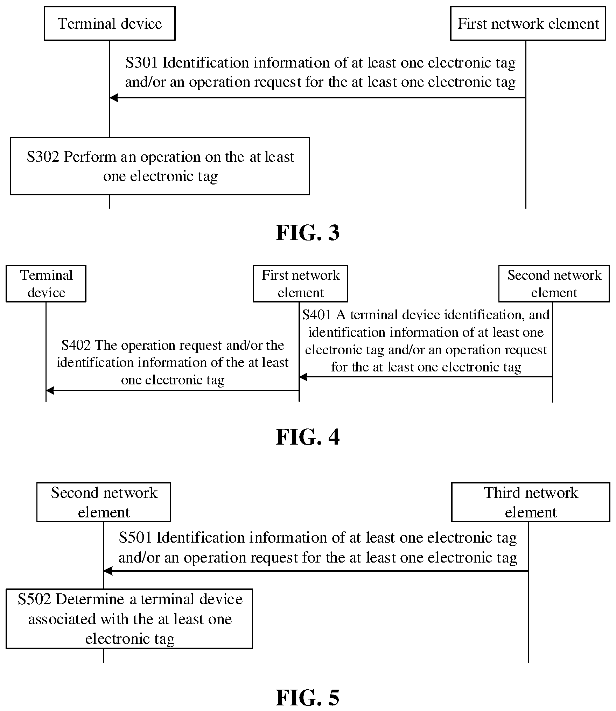

FIG. 3 is a schematic flowchart of a communication method provided in an embodiment of the present disclosure. As illustrated in FIG. 3, the method includes the following operations.

At S301, a terminal device receives, from a first network element, identification information of at least one electronic tag and/or an operation request for the at least one electronic tag.

At S302, the terminal device performs an operation on the at least one electronic tag.

Optionally, the first network element may be a network element serving the terminal device. Optionally, the first network element may be any one or more network elements in core network devices. Optionally, the first network element may include at least one of an AMF or an SMF.

Optionally, the operation request and/or the identification information of the at least one electronic tag may be carried in an NAS signaling or another signaling.

Optionally, the operation request may include at least one of: a request for obtaining relevant information, a reading request, a writing request, a modification request, or a deletion request.

Optionally, the at least one electronic tag may be at least one electronic tag corresponding to the terminal device. For example, one or more electronic tags are associated with the terminal device (optionally, the one or more electronic tags may be all electronic tags capable of communicating with the terminal device), and the one or more electronic tags include the at least one electronic tag. Optionally, the at least one electronic tag may be a subset of the one or more electronic tags.

Optionally, a part of the at least one electronic tag may be the electronic tag(s) corresponding to the terminal device, and another part of the at least one electronic tag may be the electronic tag(s) corresponding to another one or more terminal devices. For example, a part of the at least one electronic tag is included in one or more electronic tags that the terminal device includes, and another part of the at least one electronic tag is included in one or more electronic tags that other terminal device include. Optionally, the terminal device may not perform an operation on the electronic tag(s) corresponding to other one or more terminal devices.

Optionally, one or more electronic tags associated with different terminal devices may not overlap, may partially overlap, or may completely overlap.

Optionally, the terminal device may directly communicate with the electronic tag, and/or the terminal device may indirectly communicate with the electronic tag. Illustratively, an implementation in which the terminal device indirectly communicates with the electronic tag may include that: the terminal device indirectly communicates with the electronic tag through a reader-writer. Optionally, the terminal device may communicate application layer data with the reader-writer.

Optionally, the operation that the terminal device performs the operation on the at least one electronic tag may include that: the terminal device performs the operation on the at least one electronic tag locally, or the terminal device performs the operation on the at least one electronic tag by sending information to the at least one electronic tag.

Optionally, the operation that the terminal device performs the operation on the at least one electronic tag may include that: the terminal device obtains information corresponding to the operation request for the at least one electronic tag from the terminal device itself. Optionally, the information corresponding to the operation request for the at least one electronic tag may include relevant information of the at least one electronic tag. For example, before the terminal device has received the operation request and/or the identification information of the at least one electronic tag from the first network element, the terminal device may obtain the relevant information of the at least one electronic tag. Therefore, when the terminal device has received the operation request and/or the identification information of the at least one electronic tag from the first network element, the terminal device obtains the relevant information of the at least one electronic tag from the terminal device itself. Optionally, the terminal device may obtain relevant information of one or more electronic tags associated with the terminal device in real time, periodically or non-periodically. The relevant information of the one or more electronic tags may include the relevant information of the at least one electronic tag.

Optionally, the operation that the terminal device performs the operation on the at least one electronic tag may include that: the terminal device may send an operation request for the electronic tag to each of the one or more electronic tags/each of the at least one electronic tag associated with the terminal device. Optionally, the one or more electronic tags/at least one electronic tag may feed back information to the terminal device or may not feed back information. Illustratively, each of the one or more electronic tags/each of the at least one electronic tag may feed back first information to the terminal device. The first information may indicate at least one of: relevant information of each electronic tag, completion of adding information, completion of deleting information, or completion of modifying information.

For example, if the at least one electronic tag includes electronic tags A, B, and C, the operation that the terminal device performs the operation on the at least one electronic tag may include that: the terminal device performs the operation on the electronic tags A, B, and C, or the terminal device performs the operation on any one or two of the electronic tags A, B, and C, or the terminal device performs the operation on the electronic tags A, B, C, and D.

In the embodiments of the present disclosure, the terminal device receives the identification information of the at least one electronic tag and/or the operation request for the at least one electronic tag from the first network element, and the terminal device performs the operation on the at least one electronic tag. In such way, the terminal device performs the operation on the at least one electronic tag based on the information of the at least one electronic tag sent by the first network element, thereby enabling a remote operation on the electronic tag, and broadening the application range of the electronic tag.

In some embodiments, the operation request is used to obtain relevant information of the at least one electronic tag.

The operation that the terminal device performs, the operation on the at least one electronic tag includes that: the terminal device obtains the relevant information of the at least one electronic tag.

Optionally, the operation that the terminal device obtains the relevant information of the at least one electronic tag may include that: the terminal device obtains the relevant information of the at least one electronic tag from the terminal device itself.

Optionally, when the terminal device obtains the relevant information of the at least one electronic tag, the terminal device may send or not send the relevant information of the at least one electronic tag to the first network element. Optionally, the terminal device may display the relevant information of the at least one electronic tag, or the terminal device may process the relevant information of the at least one electronic tag. Optionally, the terminal device may obtain specific information of the at least one electronic tag, process the specific information of the at least one electronic tag, to obtain the relevant information of the at least one electronic tag.

In some embodiments, the method may further include that: the terminal device sends, to the first network element, the relevant information of the at least one electronic tag. For example, after the terminal device obtains the relevant information of the at least one electronic tag, the terminal device sends the relevant information of the at least one electronic tag to the first network element.

Optionally, the terminal device may send the relevant information of the at least one electronic tag to the first network element through an NAS signaling.

In some embodiments, the method may further include that: the terminal device obtains relevant information of one or more electronic tags.

The operation that the terminal device obtains the relevant information of the at least one electronic tag includes that: the terminal device determines the relevant information of the at least one electronic tag from the relevant information of the one or more electronic tags.

Optionally, the operation that the terminal device obtains the relevant information of the one or more electronic tags may be performed before or after the terminal device receives the operation request and/or the identification information of the at least one electronic tag from the first network element. Optionally, the one or more electronic tags may be all or part of the electronic tags associated with the terminal device.

Optionally, the operation that the terminal device obtains the relevant information of the one or more electronic tags may include that: the terminal device sends a request for obtaining the relevant information/stored information of the electronic tag to each of the one or more electronic tags associated with the terminal device, and the terminal device receives the relevant information/stored information of the electronic tag from each of the one or more electronic tags.

Optionally, the terminal device may determine the relevant information of the electronic tag based on the stored information of the electronic tag. Optionally, the stored information may be included in the relevant information. The stored information may be information stored in the electronic tag. For example, the relevant information may include timestamp information when the terminal device obtains the stored information. For another example, the relevant information may include position information of the electronic tag. The position information may be included in the stored information, or the position information may be determined by the terminal device according to information sent by the terminal device to the electronic tag and/or information received by the terminal device from the electronic tag.

Optionally, the operation that the terminal device obtains the relevant information of the one or more electronic tags may include the following operations. The terminal device sends a first request for obtaining the relevant information/stored information of the electronic tag to one or more reader-writers associated with the terminal device; each of the one or more reader-writers sends, after having received the first request, a second request for obtaining the relevant information/stored information of the electronic tag to one or more electronic tags associated with the reader-writer; then each of the one or more reader-writers receives the relevant information/stored information of the one or more electronic tags from the one or more electronic tags associated with the reader-writer; and then each of the one or more reader-writers sends the received relevant information/stored information of the one or more electronic tags associated with the reader-writer to the terminal device, such that the terminal device obtains the relevant information/stored information of the one or more electronic tags. Optionally, the one or more reader-writers associated with the terminal device may be all or part of reader-writers associated with the terminal device. Optionally, the one or more electronic tags associated with each reader-writer may be all or part of electronic tags associated with the each reader-writer.

In some other embodiments, the operation that the terminal device obtains the relevant information of the at least one electronic tag may include that: the terminal device sends a request for obtaining the relevant information/stored information of the electronic tag to each of the at least one electronic tag, and the terminal device receives the relevant information/stored information of the electronic tag from each of the at least one electronic tag.

In some other embodiments, the operation that the terminal device obtains the relevant information of the at least one electronic tag may include the following operations. The terminal device determines at least one reader-writer associated with the at least one electronic tag; the terminal device sends a third request for obtaining the relevant information/stored information of the electronic tag to the at least one reader-writer; each of the one or more reader-writers sends, after having received the third request, a fourth request for obtaining the relevant information/stored information of the electronic tag to the at least one electronic tag associated with each of the at least one reader-writer; then each of the at least one reader-writer receives the relevant information/stored information of the electronic tag from the at least one electronic tag associated with the reader-writer; and then each of the at least one reader-writer sends the received relevant information/stored information of the at least one electronic tag associated with the reader-writer to the terminal device, such that the terminal device obtains the relevant information/stored information of the at least one electronic tag. Optionally, the third request may include identification information of part or all of the electronic tags corresponding to each reader-writer. Optionally, the identification information of the electronic tag included in the third request sent to a reader-writer does not overlap with the identification information of the electronic tag included in the third request sent to another reader-writer.

In some embodiments, the relevant information includes information with a specific type.

In some embodiments, the relevant information or the information with the specific type includes at least one of: the identification information, position information, status information, timestamp information added by the terminal device, stored information, or information determined based on the stored information.

Optionally, the position information may include relative position information of the electronic tag relative to the terminal device, and/or absolute position information of the electronic tag.

Optionally, the status information may indicate a status of an object corresponding to the electronic tag. For example, the status of the object may include at least one of: the object being in a warehouse, the object being on a shelf, the object being in a presentation status, whether the object is being used, or the like.

Optionally, the timestamp information added by the terminal device may include: timestamp information when the terminal device has received the stored information from the electronic tag, and/or timestamp information when the electronic tag sends the relevant information/stored information of the electronic tag to the terminal device, and/or timestamp information when the terminal device sends the request for obtaining the relevant information/stored information of the electronic tag to the electronic tag.

Optionally, the stored information may be the stored information described above. Optionally, the stored information may be part or all of the information stored in the electronic tag.

Optionally, the information which is determined based on the stored information may include: information for encrypting the stored information, information for modifying the stored information, or information obtained by processing or calculating the stored information.

In some embodiments, the position information includes at least one of: absolute position information, relative position information relative to the terminal device, or position information of a located area.

Optionally, the position information in the absolute position information and/or the relative position information may include: coordinate information, latitude and longitude information, position site information, position identification information, or a global location number (GLN).

Optionally, the position information of the located area may include: house position information, road position information, residential area position information, street position information, district and county position information, city position information, or the like.

In some embodiments, the operation request is used to request at least one of: writing information into the at least one electronic tag, deleting at least part of information in the at least one electronic tag, or modifying at least part of information in the at least one electronic tag.

The operation that the terminal device performs the operation on the at least one electronic tag includes at least one of the following operations. The terminal device writes the information into the at least one electronic tag; the terminal device deletes the at least part of information in the at least one electronic tag; or the terminal device modifies the at least part of information in the at least one electronic tag.

Optionally, the operation request may include one or more bits, and different values of the one or more bits is used for distinguishing: writing the information into the at least one electronic tag, deleting the at least part of information in the at least one electronic tag, or modifying the at least part of information in the at least one electronic tag.

Optionally, the operation request may include: information to be written and/or a type of information to be written, so as to indicate writing the information into the at least one electronic tag through the information to be written and/or the type of information to be written.

Optionally, the operation request may include: information to be deleted and/or a type of information to be deleted, so as to indicate deleting the at least part of information in the at least one electronic tag through the information to be deleted and/or the type of information to be deleted.

Optionally, the operation request may include at least one of: information to be modified, modified information, a type of information to be modified, or a type of modified information, so as to indicate modifying the at least part of information in the at least one electronic tag through at least one of the information to be modified, the modified information, the type of information to be modified, or the type of modified information.

In some embodiments, the operation request includes at least one of: the information to be written, the information to be deleted, the information to be modified, the modified information, the type of information to be written, the type of information to be deleted, the type of information to be modified, or the type of modified information.

The operation of writing the information into the at least one electronic tag includes: writing the information to be written and/or information corresponding to the type of information to be written into the at least one electronic tag.

The operation of deleting the at least part of information in the at least one electronic tag includes: deleting the information to be deleted and/or information corresponding to the type of information to be deleted in the at least one electronic tag.

The operation of modifying the at least part of information in the at least one electronic tag includes: deleting the information to be modified and/or information corresponding to the type of information to be modified in the at least one electronic tag, and writing the modified information and/or information corresponding to the type of modified information into the at least one electronic tag.

Optionally, the type of information to be written, the type of information to be deleted, or the type of information to be modified may include at least one of: the identification information, the position information, the status information, or the like. Illustratively, the terminal device may write at least one of the identification information, the position information, or the status information into the electronic tag when the terminal device determines that at least one of the identification information, the position information, or the status information is not present in the electronic tag.

Optionally, the types of information to be written that are written into different electronic tags may be the same or different. Optionally, the same type of information to be written may correspond to same or different information.

Optionally, the operation that the terminal device writes the information to be written and/or the information corresponding to the type of information to be written into the at least one electronic tag may include that: the terminal device sends the information to be written and/or the information corresponding to the type of information to be written to each of the at least one electronic tag, and each of the at least one electronic tag receives the information to be written and/or the information corresponding to the type of information to be written and stores the information to be written and/or the information corresponding to the type of information to be written. Alternatively, the operation may include that: the terminal device sends a writing request to at least one reader-writer associated with the at least one electronic tag, and each of the at least one reader-writer writes, based on the writing request, the information to be written and/or the information corresponding to the type of information to be written to the electronic tag associated with the reader-writer. The writing request carries the information to be written and/or the information corresponding to the type of information to be written.

Optionally, the types of information to be deleted in different electronic tags may be the same or different. Optionally, the same type of information to be deleted may correspond to same or different information.

Optionally, the operation that the terminal device deletes the information to be deleted and/or the information corresponding to the type of information to be deleted in the at least one electronic tag may include that: the terminal device sends the information to be deleted and/or the information corresponding to the type of information to be deleted to each of the at least one electronic tag, and each of the at least one electronic tag receives the information to be deleted and/or the information corresponding to the type of information to be deleted and deletes the information to be deleted and/or the information corresponding to the type of information to be deleted. Alternatively, the operation may include that: the terminal device sends a deleting request to at least one reader-writer associated with the at least one electronic tag, and each of the at least one reader-writer deletes, based on the deleting request, the information to be deleted and/or the information corresponding to the type of information to be deleted in the electronic tag associated with the reader-writer. The deleting request carries the information to be deleted and/or the information corresponding to the type of information to be deleted.

Optionally, the types of information to be modified in different electronic tags may be the same or different. Optionally, the types of modified information in different electronic tags may be the same or different. Optionally, the same type of information to be modified may correspond to same or different information. Optionally, the same type of modified information may correspond to same or different information.

Optionally, the operation that the terminal device deletes the information to be modified and/or the information corresponding to the type of information to be modified in the at least one electronic tag and writes the modified information and/or the information corresponding to the type of modified information into the at least one electronic tag may include that: the terminal device sends a modifying request to each of the at least one electronic tag, and each of the at least one electronic tag deletes, based on the modifying request, the information to be modified and/or the information corresponding to the type of information to be modified in the electronic tag and writes the modified information and/or the information corresponding to the type of modified information into the electronic tag. Alternatively, the operation may include that: the terminal device sends a modifying request to at least one reader-writer associated with the at least one electronic tag, and each of the at least one reader-writer deletes, based on the modifying request, the information to be modified and/or the information corresponding to the type of information to be modified in the electronic tag associated with the reader-writer and writes the modified information and/or the information corresponding to the type of modified information into the electronic tag. The modifying request may include at least one of: the information to be modified, the modified information, the type of information to be modified or the type of modified information.

In some embodiments, the terminal device may send a respond message to the first network element after the terminal device performs the operation on the at least one electronic tag.

In some embodiments, the method may further include that the terminal device sends, to the first network element, a response message. The response message includes the identification information of the at least one electronic tag and/or at least one of: indication information of success or failure in writing the information into the at least one electronic tag, indication information of success or failure in deleting the at least part of information in the at least one electronic tag, or indication information of success or failure in modifying the at least part of information in the at least one electronic tag.

Optionally, the indication information may include one or more bits, and the one or more bits are for indicating at least one of: success in writing, success in deleting, success in modifying, failure in writing, failure in deleting, or failure in modifying. Optionally, the indication information may include at least one of: a cause of failure in writing, a cause of failure in deleting, or a cause of failure in modifying.

Optionally, the response message may include an identification of an electronic tag for which writing is successful and/or an identification of an electronic tag into which writing is failed. Optionally, the response message may include an identification of an electronic tag for which deleting is successful and/or an identification of an electronic tag for which deleting is failed. Optionally, the response message may include an identification of an electronic tag for which modifying is successful and/or an identification of an electronic tag for which modifying is failed.

In some embodiments, before the terminal device receives, from the first network element, the identification information of at least one electronic tag and/or the operation request for the at least one electronic tag, the method may further include that: the terminal device obtains identification information of one or more electronic tags; and the terminal device sends, to the first network element, the identification information of the one or more electronic tags.

Optionally, the identification information of the one or more electronic tags obtained by the terminal device may be determined according to a pre-configuration of the terminal device, or may be configured by an access network device or another terminal device to the terminal device.

In some embodiments, the identification information includes an electronic product code (EPC). In some other embodiments, the identification information may include at least one of: a product code, a product barcode, a product two-dimensional code, a product image, or the like.

FIG. 4 is a schematic flowchart of another communication method provided in an embodiment of the present disclosure. As illustrated in FIG. 4, the method includes the following operations.

At S401, a first network element receives, from a second network element or a third network element, a terminal device identification, and identification information of at least one electronic tag and/or an operation request for the at least one electronic tag.

At S402, the first network element sends, to a terminal device corresponding to the terminal device identification, the operation request and/or the identification information of the at least one electronic tag.

Optionally, the terminal device identification may include at least one of: a globally unique temporary identity (GUTI), an international mobile equipment identity (IMEI), an international mobile subscriber identity (IMSI), a temporary mobile subscriber identity (TMSI), a packet-temporary mobile subscriber identity (P-TMSI), or a user mobile phone number.

In some embodiments, the operation request is used to obtain relevant information of the at least one electronic tag.

In some embodiments, the method may further include that: the first network element receives, from the terminal device, the relevant information of the at least one electronic tag; and the first network element sends, to the second network element or the third network element, the relevant information of the at least one electronic tag.

After the first network element sends, to the terminal device corresponding to the terminal device identification, the operation request and/or the identification information of the at least one electronic tag, the first network element receives the relevant information of the at least one electronic tag from the terminal device.

In some embodiments, the relevant information includes at least one of: the identification information, position information, status information, timestamp information added by the terminal device, stored information, or information determined based on the stored information.

In some embodiments, the position information includes at least one of: absolute position information, relative position information relative to the terminal device, or position information of a located area.

In some embodiments, the operation request is used to request at least one of: writing information into the at least one electronic tag, deleting at least part of information in the at least one electronic tag, or modifying at least part of information in the at least one electronic tag.

In some embodiments, the operation request includes at least one of: the information to be written, the information to be deleted, the information to be modified, the modified information, the type of information to be written, the type of information to be deleted, the type of information to be modified, or the type of modified information.

The operation of writing the information into the at least one electronic tag includes: writing the information to be written and/or information corresponding to the type of information to be written into the at least one electronic tag.

The operation of deleting the at least part of information in the at least one electronic tag includes: deleting the information to be deleted and/or information corresponding to the type of information to be deleted in the at least one electronic tag.

The operation of modifying the at least part of information in the at least one electronic tag includes: deleting the information to be modified and/or information corresponding to the type of information to be modified in the at least one electronic tag, and writing the modified information and/or information corresponding to the type of modified information into the at least one electronic tag.

In some embodiments, the method may further include the following operations. The first network element receives, from the terminal device, a response message, the response message including the identification information of the at least one electronic tag and/or at least one of: indication information of success or failure in writing the information into the at least one electronic tag, indication information of success or failure in deleting the at least part of information in the at least one electronic tag, or indication information of success or failure in modifying the at least part of information in the at least one electronic tag; and the first network element sends, to the second network element or the third network element, the response message.

After the first network element sends, to the terminal device corresponding to the terminal device identification, the operation request and/or the identification information of the at least one electronic tag, the first network element receives the response message from the terminal device.

In some embodiments, before the first network element receives, from the second network element or the third network element, the terminal device identification, and the identification information of the at least one electronic tag and/or the operation request for the at least one electronic tag, the method further includes the following operations. The first network element receives, from the terminal device, identification information of one or more electronic tags; and the first network element sends, to the second network element or the third network element, the terminal device identification, and the identification information of the one or more electronic tags associated with the terminal device.

Optionally, the terminal device identification may be sent by the terminal device to the first network element.

In some embodiments, the identification information includes an EPC.

FIG. 5 is a schematic flowchart of yet another communication method provided in an embodiment of the present disclosure. As illustrated in FIG. 5, the method includes the following operations.

At S501, a second network element receives, from a third network element, identification information of at least one electronic tag and/or an operation request for the at least one electronic tag.

At S501, the second network element determines a terminal device associated with the at least one electronic tag.

Optionally, the second network element may include a network element capable of obtaining a terminal device identification associated with the at least one electronic tag. For example, the second network element may store: the terminal device identification and the identification information of the at least one electronic tag associated with the terminal device identification. For another example, the second network element may obtain, from another device or another network element, the terminal device identification and the identification information of the at least one electronic tag associated with the terminal device identification.

Optionally, the second network element may be a network element in 5GC, or the second network element may be a network element in non-5GC. Illustratively, the second network element may include at least one of: a UDM, a unified data repository (UDR), a network repository function (NRF), an unstructured data storage function (UDSF), or the like. Also illustratively, the second network element may be a new network element defined in the protocol, or the second network element may be a core network element in a 6G or 7G system.

In some embodiments, the method further includes that: the second network element sends, to a first network element serving the terminal device, the terminal device identification associated with the identification information of the at least one electronic tag, and the operation request and/or the identification information of the at least one electronic tag. This operation is performed after the second network element determines the terminal device associated with the at least one electronic tag.

In some embodiments, the method further includes that: the second network element sends, to the third network element, the terminal device identification associated with the identification information of the at least one electronic tag. This operation is performed after the second network element determines the terminal device associated with the at least one electronic tag.

In some embodiments, the operation request is used to obtain relevant information of the at least one electronic tag.

In some embodiments, the relevant information includes at least one of: the identification information, position information, status information, timestamp information added by the terminal device, stored information, or information determined based on the stored information.

In some embodiments, the position information includes at least one of: absolute position information, relative position information relative to the terminal device, or position information of a located area.

In some embodiments, the operation request is used to request at least one of: writing information into the at least one electronic tag, deleting at least part of information in the at least one electronic tag, or modifying at least part of information in the at least one electronic tag.

In some embodiments, the operation request includes at least one of: the information to be written, the information to be deleted, the information to be modified, the modified information, the type of information to be written, the type of information to be deleted, the type of information to be modified, or the type of modified information.

The operation of writing the information into the at least one electronic tag includes: writing the information to be written and/or information corresponding to the type of information to be written into the at least one electronic tag.

The operation of deleting the at least part of information in the at least one electronic tag includes: deleting the information to be deleted and/or information corresponding to the type of information to be deleted in the at least one electronic tag.

The operation of modifying the at least part of information in the at least one electronic tag includes: deleting the information to be modified and/or information corresponding to the type of information to be modified in the at least one electronic tag, and writing the modified information and/or information corresponding to the type of modified information into the at least one electronic tag.

In some embodiments, before the second network element receives, from the third network element, the identification information of the at least one electronic tag and/or the operation request for the at least one electronic tag, the method may further include the following operations.

The second network element receives, from the first network element serving the terminal device, the terminal device identification, and identification information of one or more electronic tags associated with the terminal device; and the second network element stores the terminal device identification and the identification information of the one or more electronic tags associated with the terminal device.

In some embodiments, the identification information includes an EPC.

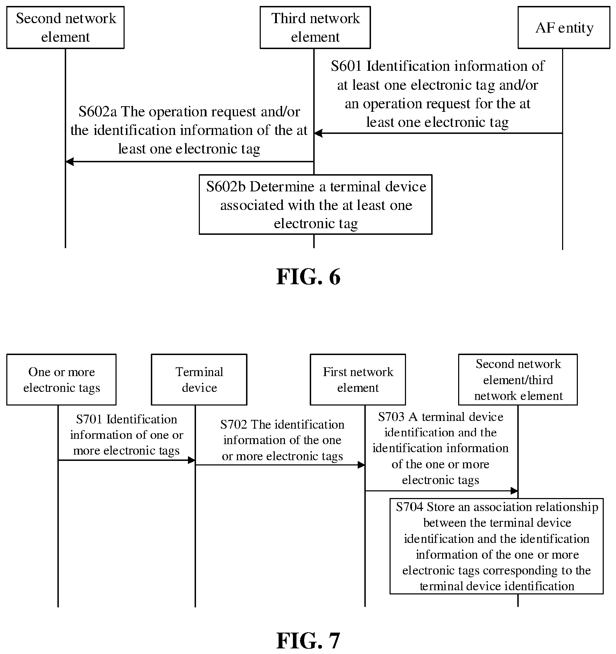

FIG. 6 is a schematic flowchart of yet another communication method provided in an embodiment of the present disclosure. As illustrated in FIG. 6, the method includes the following operations.

At S601, a third network element receives, from an AF entity, identification information of at least one electronic tag and/or an operation request for the at least one electronic tag.

The operation S602a or S602b may be performed after S601.

At S602a, the third network element sends, to a second network element, the operation request and/or the identification information of the at least one electronic tag.

At S602b, the third network element determines a terminal device associated with the at least one electronic tag.

Optionally, the third network element may be a network element capable of communicating with the AF entity. Optionally, the third network element may be the same network element as the second network element, or the third network element may be a different network element from the second network element.

Optionally, the third network element may be a network element in 5GC, or the third\ network element may be a network element in non-5GC. Optionally, the third network element may include at least one of an NEF, a PCF, or the like. Also illustratively, the third network element may be a new network element defined in the protocol, or the third network element may be a core network element in a 6G or 7G system.

In some embodiments, after the third network element determines the terminal device associated with the at least one electronic tag, the method includes that: the third network element sends, to a first network element serving the terminal device, a terminal device identification associated with the identification information of the at least one electronic tag, and the operation request and/or the identification information of the at least one electronic tag.

In some embodiments, the operation that the third network element determines the terminal device associated with the at least one electronic tag includes that: the third network element determines the terminal device identification based on stored terminal device identifications and identification information of one or more electronic tags associated with the terminal device.

In some embodiments, the operation that the third network element determines the terminal device associated with the at least one electronic tag includes that: the third network element sends, to the second network element, the identification information of the at least one electronic tag, and the third network element receives, from the second network element, the terminal device identification.

In some embodiments, the operation request is used to obtain relevant information of the at least one electronic tag.

In some embodiments, the method may further include the following operations.

The third network element receives, from the first network element serving the terminal device, the relevant information of the at least one electronic tag; and the third network element sends, to the AF entity, the relevant information of the at least one electronic tag; or the third network element processes the relevant information of the at least one electronic tag to obtain target information, and the third network element sends, to the AF entity, the target information.

The operation that the third network element receives, from the first network element serving the terminal device, the relevant information of the at least one electronic tag is performed after the third network element sends, to the first network element serving the terminal device, the terminal device identification associated with the identification information of the at least one electronic tag, and the operation request and/or the identification information of the at least one electronic tag.

In some embodiments, the relevant information of the at least one electronic tag includes relative position information of the at least one electronic tag relative to the terminal device; and the target information includes absolute position information of the at least one electronic tag.

The operation that the third network element processes the relevant information of the at least one electronic tag to obtain the target information includes that: the third network element determines the absolute position information of the at least one electronic tag based on the relative position information of the at least one electronic tag relative to the terminal device and absolute position information of the terminal device.

Optionally, when the third network element has received, from the AF entity, the identification information of the at least one electronic tag and/or the operation request for the at least one electronic tag, the third network element may obtain the absolute position information of the terminal device. Therefore, the third network element, when having received the relative position information from the first network element, may determine the absolute position information of the at least one electronic tag based on the relative position information and the absolute position information of the terminal device.

Optionally, when the third network element has received the relative position information from the first network element, the third network element may obtain the absolute position information of the terminal device, then the third network element may determine the absolute position information of the at least one electronic tag based on the relative position information and the absolute position information of the terminal device.

Optionally, the third network element may store the absolute position information of the terminal device, or the third network element may obtain the absolute position information of the terminal device from another network element. For example, said another network element may be an LMF or another application network element.

In some embodiments, the relevant information includes at least one of: the identification information, position information, status information, timestamp information added by the terminal device, stored information, or information determined based on the stored information.

In some embodiments, the position information includes at least one of: absolute position information, relative position information relative to the terminal device, or position information of a located area.

In some embodiments, the operation request is used to request at least one of: writing information into the at least one electronic tag, deleting at least part of information in the at least one electronic tag, or modifying at least part of information in the at least one electronic tag.

In some embodiments, the operation request includes at least one of: the information to be written, the information to be deleted, the information to be modified, the modified information, the type of information to be written, the type of information to be deleted, the type of information to be modified, or the type of modified information.

The operation of writing the information into the at least one electronic tag includes: writing the information to be written and/or information corresponding to the type of information to be written into the at least one electronic tag.

The operation of deleting the at least part of information in the at least one electronic tag includes: deleting the information to be deleted and/or information corresponding to the type of information to be deleted in the at least one electronic tag.

The operation of modifying the at least part of information in the at least one electronic tag includes: deleting the information to be modified and/or information corresponding to the type of information to be modified in the at least one electronic tag, and writing the modified information and/or information corresponding to the type of modified information into the at least one electronic tag.

In some embodiments, the method further includes that the third network element receives, from the first network element serving the terminal device, a response message. The response message includes the identification information of the at least one electronic tag and/or at least one of: indication information of success or failure in writing the information into the at least one electronic tag, indication information of success or failure in deleting the at least part of information in the at least one electronic tag, or indication information of success or failure in modifying the at least part of information in the at least one electronic tag. The method further includes that the third network element sends the response message to the AF entity.

The operation that the third network element receives the response message from the first network element serving the terminal device may be performed after the third network element sends the operation request and/or the identification information of the at least one electronic tag; or after the third network element sends, to the first network element serving the terminal device, the terminal device identification associated with the identification information of the at least one electronic tag, and the operation request and/or the identification information of the at least one electronic tag.

In some embodiments, before the third network element receives, from the AF entity, the identification information of the at least one electronic tag and/or the operation request for the at least one electronic tag, the method may further include the following operations.

The third network element receives, from the first network element serving the terminal device, the terminal device identification, and identification information of one or more electronic tags associated with the terminal device; and the third network element stores the terminal device identification, and the identification information of the one or more electronic tags associated with the terminal device.

In some embodiments, the identification information includes an EPC.

FIG. 7 is a schematic flowchart of a communication method provided in another embodiment of the present disclosure. As illustrated in FIG. 7, the method includes the following operations.

At S701, a terminal device obtains identification information of one or more electronic tags.

Optionally, the terminal device may obtain, from each of the one or more electronic tags, the identification information of the electronic tag. Optionally, the identification information of the electronic tag may include an EPC of the electronic tag.

Optionally, in some embodiments, the terminal device may provide a read-write function for an electronic tag. For example, if the electronic tag is an RFID tag, the terminal device may obtain the identification information of the electronic tag through an RFID technology. For another example, if the electronic tag is a passive IoT tag or an ambient IoT tag, the terminal device may obtain the identification information of the electronic tag through a technology defined by passive IoT or ambient IoT.

Optionally, in some other embodiments, the terminal device may communicate with one or more electronic tag reader-writers wirelessly. The electronic tag reader-writer obtains the identification information of the electronic tag through the RFID technology, or the technology defined by passive IoT or ambient IoT, and then sends the identification information of the electronic tag to the terminal device. The interaction between the electronic tag reader-writer and the terminal device may be performed, for example, through data interaction in the application layer.

At S702, the terminal device sends the obtained identification information of the one or more electronic tags to a first network element, located in a core network, serving the terminal device.

Optionally, the first network element is, for example, an AMF or an SMF in a 5G network. For example, the terminal device may send the identification information of the electronic tag to the AMF through a mobility management message or may send the identification information of the electronic tag to the SMF through a session management message.

At S703, the first network element may determine a terminal device identification according to a mobility management procedure or a session management procedure, and the first network element sends the terminal device identification and the identification information of the one or more electronic tags to the second network element/third network element located in the core network.

Optionally, the second network element/third network element may be, for example, a network element such as a UDM, a UDR, an NRF, or a UDSF in a 5G network, or may be a network element specially configured for managing electronic tags.

S704, the second network element/third network element stores an association relationship between the terminal device identification and the identification information of the one or more electronic tags corresponding to the terminal device identification.

Optionally, the one or more electronic tags corresponding to the terminal device identification may be one or more electronic tags capable of communicating with the terminal device.

Based on the above embodiment, the core network in the mobile network stores the association relationship between the terminal device identification and the identification information of the one or more electronic tags.

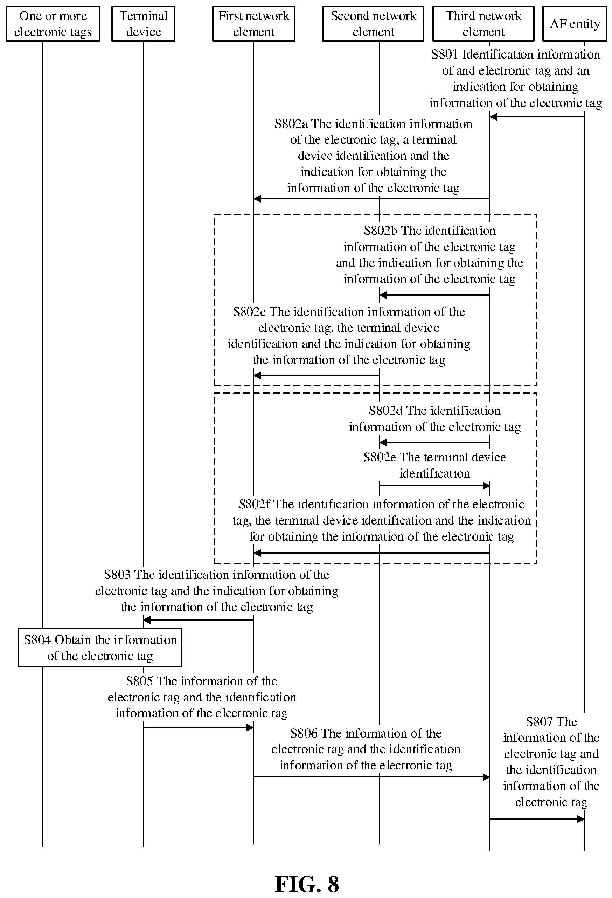

FIG. 8 is a schematic flowchart of a communication method provided in yet another embodiment of the disclosure. As illustrated in FIG. 8, the embodiment corresponding to FIG. 8 may be implemented on the basis of the embodiment corresponding to FIG. 7. In the embodiment corresponding to FIG. 8, an AF entity may request to obtain information of the electronic tag (corresponding to the relevant information of the electronic tag in the above embodiments) to a core network, and the method includes the following operations.

At S801, an AF entity sends, to a third network element located in a core network, identification information of an electronic tag and an indication for obtaining information of the electronic tag. There may be at least one electronic tag.

Optionally, in some other embodiments, the identification information of the (at least one) electronic tag and the indication for obtaining the information of the electronic tag may be replaced with the identification information of the (at least one) electronic tag or the indication for obtaining the information of the electronic tag.

Optionally, the identification information of the (at least one) electronic tag and/or the indication for obtaining the information of the electronic tag are/is used to obtain the information of the electronic tag.

Optionally, in any of the embodiments of disclosure, the information of the electronic tag may be understood as the relevant information of the electronic tag.

Optionally, in any of the embodiments of disclosure, the identification information of the electronic tag may be replaced with an electronic tag identification.

Optionally, the indication for obtaining the information of the electronic tag may be an indication parameter carried in a request message, or may be indicated by a message name. Optionally, the indication for obtaining the information of the electronic tag may further indicate to obtain information with a specific type. The information with the specific type may indicate, for example, at least one of: reading information stored in the electronic tag (part or all of the stored information, and the part of stored information may include information with a preset type), status information of the electronic tag, obtaining position information of the electronic tag, or the like. Optionally, the third network element may be, for example, an NEF in a 5G system, or may be a network element specially configured for managing electronic tags.

In some embodiments, an operation S802a, or operations S802b and S802c, or operations S802d to S802f may be performed after the operation S801.

At S802a, the third network element determines a terminal device identification corresponding to the electronic tag, and sends the identification information of the electronic tag, the terminal device identification and the indication for obtaining the information of the electronic tag to a first network element serving the terminal device.

At S802b, the third network element sends the identification information of the electronic tag and the indication for obtaining the information of the electronic tag to a second network element.

At S802c, the second network element determines a terminal device associated with the electronic tag, and sends, to the first network element serving the terminal device, the identification information of the electronic tag, the terminal device identification and the indication for obtaining the information of the electronic tag.

Optionally, the second network element may further send information of the third network element information to the first network element. Optionally, the information of the third network element may include at least one of: an identification of the third network element, a time when the third network element sends the identification information of the electronic tag and the indication for obtaining the information of the electronic tag, or the like.

At S802d, the third network element sends the identification information of the electronic tag to the second network element, and queries the second network element for the terminal device identification associated with the electronic tag.

At S802e, the third network element obtains the terminal device identification associated with the electronic tag from the second network element.

At S802f, the third network element sends the identification information of the electronic tag, the terminal device identification and the indication for obtaining the information of the electronic tag to the first network element serving the terminal device.

In such way, the first network element can obtain the terminal device identification, the identification information of the electronic tag, and the indication for obtaining the information of the electronic tag through the operation S802a, or the operations S802b and S802c, or the operations S802d to S802f. Then, an operation S803 may be continued to be performed.

At S803, the first network element, serving terminal device associated with the electronic tag, sends the identification information of the electronic tag and the indication for obtaining the information of the electronic tag to the terminal device.

Optionally, the terminal device associated with the electronic tag may also be referred to as a terminal device corresponding to the terminal device identification.

At S804, the terminal device obtains the information of the electronic tag.

Optionally, the information of the electronic tag may include, for example, at least one of: an identification, a position, status information of the electronic tag, timestamp for obtaining the information, or the like. Optionally, the information of the electronic tag may be read from the electronic tag, and/or added by the terminal device, and/or generated after calculation and analysis by the terminal device. Illustratively, the information associated with the electronic tag added by the terminal device may be, for example, the timestamp for obtaining the information of the electronic tag. Illustratively, the information generated after calculation and analysis by the terminal device may be, for example, the position information of the electronic tag. Optionally, the position information of the electronic tag may include: position information of the electronic tag relative to the terminal device, and/or absolute position information of the electronic tag.

Optionally, the terminal device may provide a read-write function for an electronic tag, and the information of the electronic tag may be obtained by an RFID technology or a technology defined by passive IoT or ambient IoT. The terminal device may read information of multiple electronic tags in batches and select the information of the electronic tag from the information of these electronic tags. The terminal device may also select information, with a specific type, of the electronic tag based on the indication for obtaining the information of the electronic tag, for example, an indication for obtaining the information with the specific type.

Optionally, the terminal device may communicate with one or more electronic tag reader-writers wirelessly. The electronic tag reader-writer obtains the information of the electronic tag through the RFID technology, or the technology defined by passive IoT or ambient IoT, and then sends the information of the electronic tag to the terminal device. The interaction between the electronic tag reader-writer and the terminal device may be performed, for example, through data interaction in the application layer. The electronic tag reader-writer may determine a position of the electronic tag based on wireless signal information interacted with the electronic tag, or may send the wireless signal information interacted with the electronic tag to the terminal device. The terminal device may determine the position information of the electronic tag based on the wireless signal information or the position information of the electronic tag obtained from multiple electronic tag reader-writers.

Optionally, operations S805 to S807 may also be performed after the operation S804.

At S805, the terminal device sends the information of the electronic tag to the first network element, or the terminal device sends the information of the electronic tag and the identification information of the electronic tag to the first network element.

At S806, the first network element sends the information of the electronic tag to the third network element, or the first network element sends the information of the electronic tag and the identification information of the electronic tag to the third network element.

At S807, the third network element sends the information of the electronic tag to the AF entity, or the third network element sends the information of the electronic tag and the identification information of the electronic tag to the AF entity.

Optionally, the third network element may further process the information of the electronic tag and send the information of the electronic tag to the AF entity. For example, the information of the electronic tag is the position information of the electronic tag relative to the terminal device. The third network element may obtain the position information of the terminal device based on a positioning technology in a mobile network, then the third network element may determine global position information of the electronic tag (which may also be referred to as absolute position information of the electronic tag) based on the position information of the electronic tag relative to the terminal device and the position information of the terminal device, and then send the global position information of the electronic tag to the AF entity.

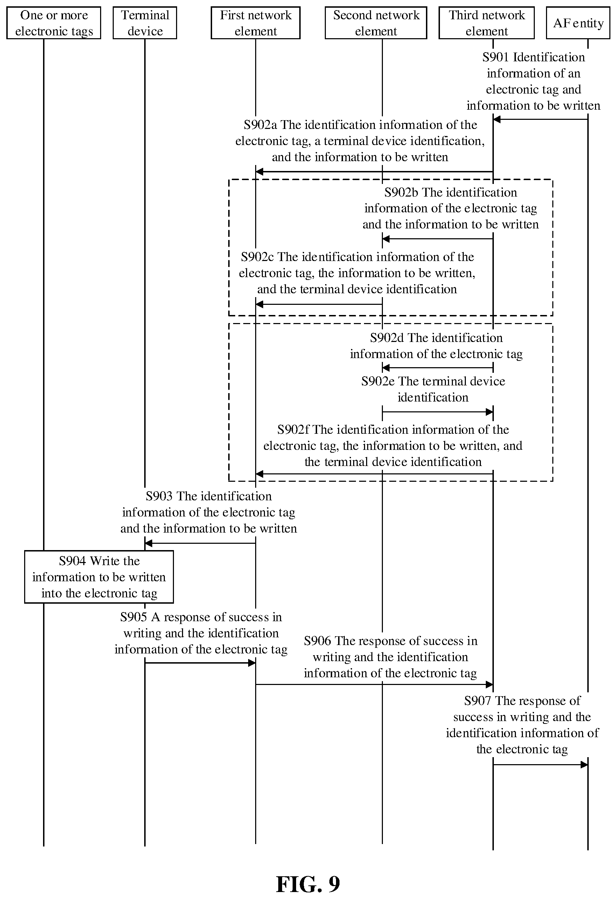

FIG. 9 is a schematic flowchart of a communication method provided in still yet another embodiment of the disclosure. As illustrated in FIG. 9, the embodiment corresponding to FIG. 9 may be implemented on the basis of the embodiment corresponding to FIG. 7. In the embodiment corresponding to FIG. 9, an AF entity may request to acquire information of the electronic tag (corresponding to the relevant information of the electronic tag in the above embodiments) to a core network, and the method includes the following operations.

At S901, an AF entity sends, to a third network element located in a core network, identification information of an electronic tag and information to be written, to request to write information to be written into the electronic tag. There may be at least one electronic tag.

Optionally, the third network element may be, for example, an NEF in a 5G system, or may be a network element specially configured for managing electronic tags.

Optionally, in some other embodiments, the identification information of the electronic tag and the information to be written may be replaced with the identification information of the electronic tag or the information to be written.

In some embodiments, an operation S902a, or operations S902b and S902c, or operations S902d to S902f may be performed after the operation S901.

At S902a, the third network element determines a terminal device identification corresponding to the electronic tag, and sends, to a first network element serving the terminal device, the identification information of the electronic tag, the terminal device identification, and the information to be written.

At S902b, the third network element sends the identification information of the electronic tag and the information to be written to a second network element.

At S902c, the second network element determines a terminal device associated with the electronic tag, and sends the identification information of the electronic tag, the information to be written, and the terminal device identification to the first network element serving the terminal device.

At S902d, the third network element sends the identification information of the electronic tag to the second network element, and queries the second network element for the terminal device associated with the electronic tag.

At S902e, the third network element obtains the terminal device identification associated with the electronic tag from the second network element.

At S902f, the third network element sends the identification information of the electronic tag, the information to be written, and the terminal device identification to the first network element serving the terminal device.

At S903, the first network element sends the identification information of the electronic tag and the information to be written to the terminal device.

At S904, the terminal device writes the information to be written into the electronic tag.

Optionally, the terminal device may provide a read-write function for an electronic tag, to write information into the electronic tag through an RFID technology or a technology defined by passive IoT or ambient IoT. Alternatively, the terminal device may communicate with one or more electronic tag reader-writers wirelessly, to send the identification information of the electronic tag and the information to be written to the electronic tag reader-writer through data interaction in an application layer. The electronic tag reader-writer writes the information into the electronic tag through the RFID technology, or the technology defined by passive IoT or ambient IoT.

Optionally, operations S905 to S907 may also be performed after the operation S904.

At S905, the terminal device sends a response of success in writing to the first network element. Optionally, the identification information of the corresponding electronic tag may also be carried.

At S906, the first network element sends a response of success in writing to the third network element. Optionally, the identification information of the corresponding electronic tag may also be carried.

At S907, the third network element sends the response of success in writing to the AF. Optionally, the identification information of the electronic tag may also be carried.

According to the embodiments of the disclosure, a problem that reading, writing and positioning of the electronic tag are limited to the local item management and communication within about 100 meters can be solved, and the electronic tag can be read, written or positioned remotely, thereby expanding application scenarios of the electronic tag.

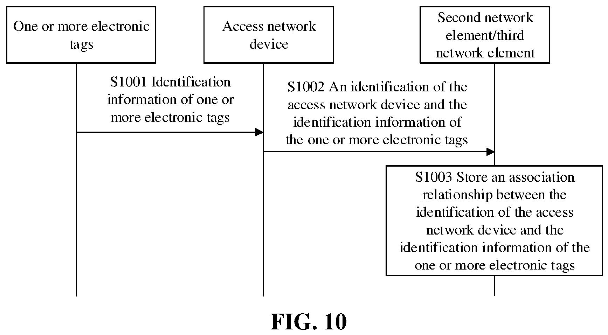

FIG. 10 is a schematic flowchart of another communication method provided in another embodiment of the present disclosure. As illustrated in FIG. 10, the method includes the following operations.

At S1001, an access network device obtains identification information of one or more electronic tags.

Optionally, the access network device may obtain, from each of the one or more electronic tags, the identification information of the electronic tag.

Optionally, in some embodiments, the access network device may provide a read-write function for an electronic tag. For example, if the electronic tag is an RFID tag, the access network device may obtain the identification information of the electronic tag through an RFID technology. For another example, if the electronic tag is a passive IoT tag or an ambient IoT tag, the access network device may obtain the identification information of the electronic tag through a technology defined by passive IoT or ambient IoT.

Optionally, in some other embodiments, the access network device may communicate with one or more electronic tag reader-writers wirelessly. The electronic tag reader-writer obtains the identification information of the electronic tag through the RFID technology, or the technology defined by passive IoT or ambient IoT, and then sends the identification information of the electronic tag to the access network device. The interaction between the electronic tag reader-writer and the access network device may be performed, for example, through data interaction in an application layer.

At S1002, the access network device sends an identification of the access network device and the identification information of the one or more electronic tags to a second network element/third network element located in a core network.

At S1003, the second network element/third network element stores an association relationship between the identification of the access network device and the identification information of the one or more electronic tags corresponding to the identification of the access network device.

Optionally, the one or more electronic tags corresponding to the identification of the access network device may be one or more electronic tags capable of communicating with the access network device.

According to the above embodiment, a core network in a mobile network stores the association relationship between the identification of the access network device and the identification information of the one or more electronic tags.

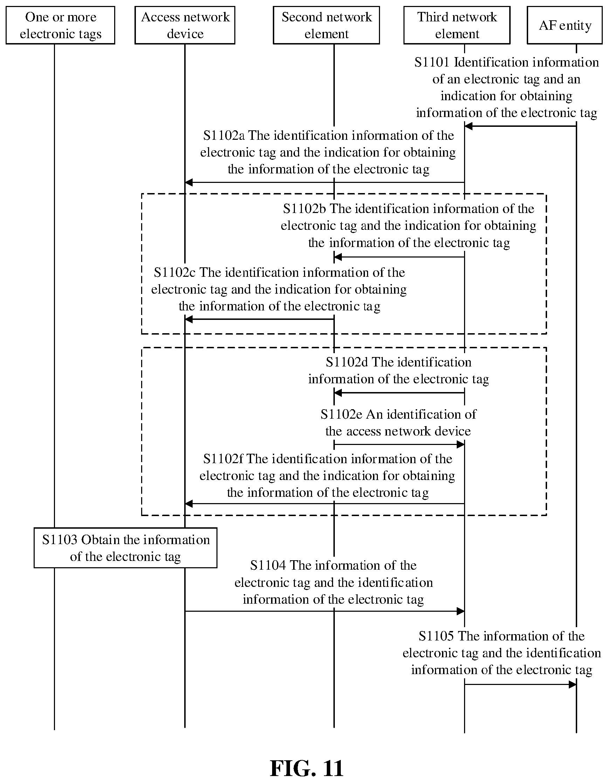

FIG. 11 is a schematic flowchart of yet another communication method provided in another embodiment of the disclosure. As illustrated in FIG. 11, the embodiment corresponding to FIG. 11 may be implemented on the basis of the embodiment corresponding to FIG. 10. In the embodiment corresponding to FIG. 11, an AF entity may request to acquire information of the electronic tag (corresponding to the relevant information of the electronic tag in the above embodiments) to a core network, and the method includes the following operations.

At S1101, an AF entity sends, to a third network element located in a core network, identification information of an electronic tag and an indication for obtaining information of the electronic tag. There may be at least one electronic tag.

In some embodiments, an operation S1102a, or operations S1102b and S1102c, or operations S1102d to S1102f may be performed after the operation S1101.

At S1102a, a third network element determines an identification of an access network device corresponding to the electronic tag, and sends the identification information of the electronic tag and the indication for obtaining the information of the electronic tag to an access network device corresponding to the identification of the access network device.

At S1102b, the third network element sends the identification information of the electronic tag and the indication for obtaining the information of the electronic tag to a second network element.

At S1102c, the second network element determines the identification of the access network device associated with the electronic tag, and sends the identification information of the electronic tag and the indication for obtaining the information of the electronic tag to the access network device corresponding to the identification of the access network device.

Optionally, the second network element may further send information of the third network element information to the first network element. Optionally, the information of the third network element may include at least one of: an identification of the third network element, a time when the third network element sends the identification information of the electronic tag and the indication for obtaining the information of the electronic tag, or the like.

At S1102d, the third network element sends the identification information of the electronic tag to the second network element, and queries the second network element for the identification of the access network device associated with the electronic tag.

At S1102e, the third network element obtains the identification of the access network device associated with the electronic tag from the second network element.

At S1102f, the third network element sends the identification information of the electronic tag and the indication for obtaining the information of the electronic tag to the access network device corresponding to the identification of the access network device.

In such way, the access network device can obtain the identification information of the electronic tag and the indication for obtaining the information of the electronic tag through the operation S1102a, or the operations S1102b and S1102c, or the operations S1102d to S1102f. Then, an operation S1103 may be continued to be performed.

At S1103, the access network device obtains the information of the electronic tag.

Optionally, operations S1104 and S1105 may also be performed after the operation S1103.

At S1104, the access network device sends the information of the electronic tag to the third network element, or the access network device sends the information of the electronic tag and the identification information of the electronic tag to the third network element.

At S1105, the third network element sends the information of the electronic tag to the AF entity, or the third network element sends the information of the electronic tag and the identification information of the electronic tag to the AF entity.

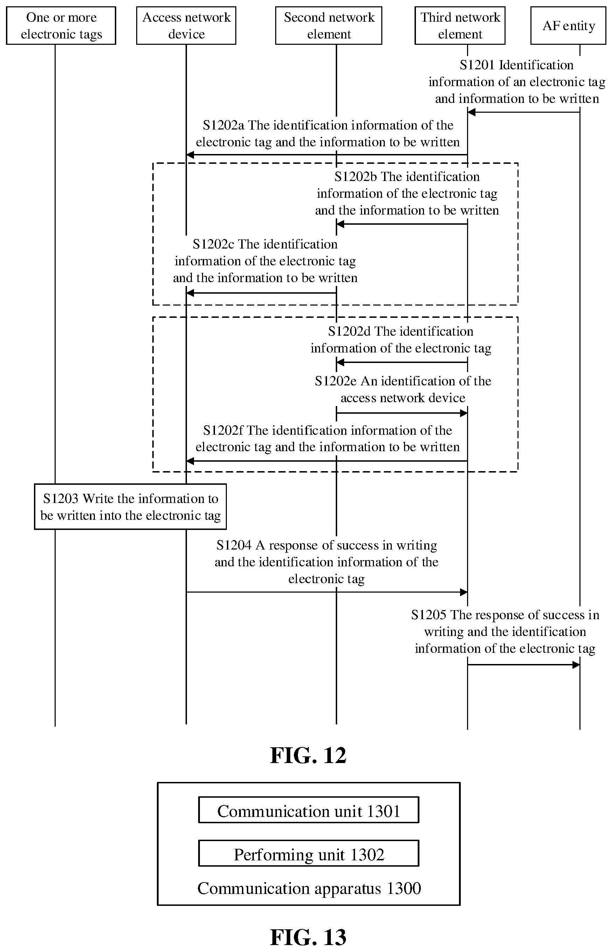

FIG. 12 is a schematic flowchart of still yet another communication method provided in another embodiment of the disclosure. As illustrated in FIG. 12, the embodiment corresponding to FIG. 12 may be implemented on the basis of the embodiment corresponding to FIG. 10. In the embodiment corresponding to FIG. 12, an AF entity may request to obtain information of the electronic tag (corresponding to the relevant information of the electronic tag in the above embodiments) to a core network, and the method includes the following operations.

At S1201, an AF entity sends, to a third network element located in a core network, identification information of an electronic tag and information to be written. There may be at least one electronic tag.

In some embodiments, an operation S1202a, or operations S1202b and S1202c, or operations S1202d to S1202f may be performed after the operation S1201.

At S1202a, the third network element determines an identification of an access network device corresponding to the electronic tag, and sends the identification information of the electronic tag and the information to be written to an access network device corresponding to the identification of the access network device.

At S1202b, the third network element sends the identification information of the electronic tag and the information to be written to a second network element.

At S1202c, the second network element determines the identification of the access network device associated with the electronic tag, and sends the identification information of the electronic tag and the information to be written to the access network device corresponding to the identification of the access network device.

Optionally, the second network element may further send information of the third network element information to the first network element. Optionally, the information of the third network element may include at least one of: an identification of the third network element, a time when the third network element sends the information to be written and the identification information of the electronic tag, or the like.

At S1202d, the third network element sends the identification information of the electronic tag to the second network element, and queries the second network element for the identification of the access network device associated with the electronic tag.

At S1202e, the third network element obtains the identification of the access network device associated with the electronic tag from the second network element.

At S1202f, the third network element sends the identification information of the electronic tag and the information to be written to the access network device corresponding to the identification of the access network device.

In such way, the access network device can obtain the identification information of the electronic tag and the information to be written through the operation S 1202a, or the operations S1202b and S1202c, or the operations S1202d to S1202f. Then, an operation S1203 may be continued to be performed.

At S1203, the access network device writes the information to be written into the electronic tag.

Optionally, operations S1204 and S1205 may also be performed after the operation S1203.

At S1204, the access network device sends a response of success in writing to the third network element. Optionally, the identification information of the corresponding electronic tag may also be carried.

At S1205, the third network element sends the response of success in writing to the AF. Optionally, the identification information of the corresponding electronic tag may also be carried.

Optionally, in some other embodiments, in the embodiments corresponding to FIG. 9 and FIG. 12, the information to be written may be replaced with at least one of: the information to be written, information to be deleted, information to be modified, modified information, a type of information to be written, a type of information to be deleted, a type of information to be modified, or a type of modified information.

Preferred embodiments of the disclosure have been described in detail above with reference to the accompanying drawings. However, the disclosure is not limited to the specific details of the above embodiments. Various simple modifications may be made to the technical solution of the present disclosure within the scope of the technical conception of the disclosure, and these simple modifications shall fall within the scope of protection of the present disclosure. For example, various specific technical features described in the above specific embodiments may be combined in any suitable manner without contradiction, and various possible combinations are not further described in the disclosure in order to avoid unnecessary repetition. For another example, various implementations of the disclosure may also be arbitrarily combined with each other, as long as the combination does not depart from the idea of the disclosure and they shall also be considered as the content of the disclosure. For another example, various embodiments described in the disclosure and/or the technical features in the embodiments may be combined with the prior art in any manner on the premise of no conflict, and the combined technical solution should also fall within the scope of protection of the disclosure.

It should be understood that in various method embodiments of the disclosure, the size of the sequence number of the above-mentioned operations does not mean an order of execution, and the execution order of the operations is determined by their functions and inherent logic, which should not be limited in any way to the implementation process of the embodiments of the disclosure. Further, in the embodiments of the disclosure, the terms "downlink", "uplink" and "sidelink" each represents a transmission direction of a signal or data. The term "downlink" is used for representing that the transmission direction of signals or data is a first direction from a station to UE in a cell, the term "uplink" is used for representing that the transmission direction of the signal or data is a second direction from the UE of the cell to the station, and the term "sidelink" is used for representing that the transmission direction of the signal or data is a third direction from first UE to second UE. For example, the "downlink signal" means that the transmission direction of the signal is the first direction. In addition, in the embodiments of the disclosure, the term "and/or" herein is only used to describe an association relationship between associated objects, and represents that three relationships may exist. Specifically, A and/or B may represent three conditions: i.e., independent existence of A, existence of both A and B and independent existence of B. In addition, the character "/" in the disclosure usually represents that previous and next associated objects form an "or" relationship.

FIG. 13 is a schematic diagram of structural composition of a communication apparatus provided in an embodiment of the disclosure. The communication apparatus is applied to a terminal device, and as illustrated in FIG. 13, the communication apparatus 1300 includes a communication unit 1301 and a performing unit 1302.

The communication unit 1301 is used to receive, from a first network element, identification information of at least one electronic tag and/or an operation request for the at least one electronic tag.

The performing unit 1302 is used to perform an operation on the at least one electronic tag.

In some embodiments, the operation request is used to obtain relevant information of the at least one electronic tag.

The performing unit 1302 is further used to obtain the relevant information of the at least one electronic tag.

In some embodiments, the communication unit 1301 is further used to send, to the first network element, the relevant information of the at least one electronic tag.

In some embodiments, the performing unit 1302 is further used to: obtain relevant information of one or more electronic tags; and determine the relevant information of the at least one electronic tag from the relevant information of the one or more electronic tags.

In some embodiments, the relevant information includes at least one of: the identification information, position information, status information, timestamp information added by the terminal device, stored information, or information determined based on the stored information.

In some embodiments, the position information includes at least one of: absolute position information, relative position information relative to the terminal device, or position information of a located area.

In some embodiments, the operation request is used to request at least one of: writing information into the at least one electronic tag, deleting at least part of information in the at least one electronic tag, or modifying at least part of information in the at least one electronic tag.

The performing unit 1302 is further used to perform at least one of: writing the information into the at least one electronic tag; deleting the at least part of information in the at least one electronic tag; or modifying the at least part of information in the at least one electronic tag.

In some embodiments, the operation request includes at least one of: information to be written, information to be deleted, information to be modified, modified information, a type of information to be written, a type of information to be deleted, a type of information to be modified, or a type of modified information.

The performing unit 1302 is further used to perform at least one of: writing the information to be written and/or information corresponding to the type of information to be written into the at least one electronic tag; deleting the information to be deleted and/or information corresponding to the type of information to be deleted in the at least one electronic tag; or deleting the information to be modified and/or information corresponding to the type of information to be modified in the at least one electronic tag, and writing the modified information and/or information corresponding to the type of modified information into the at least one electronic tag.

In some embodiments, the communication unit 1301 is further used to: send, to the first network element, a response message. The response message includes the identification information of the at least one electronic tag and/or at least one of: indication information of success or failure in writing the information into the at least one electronic tag, indication information of success or failure in deleting the at least part of information in the at least one electronic tag, or indication information of success or failure in modifying the at least part of information in the at least one electronic tag.

In some embodiments, the performing unit 1302 is further used to obtain identification information of one or more electronic tags; and the communication unit 1301 is further used to send, to the first network element, the identification information of the one or more electronic tags.

In some embodiments, the identification information includes an EPC.

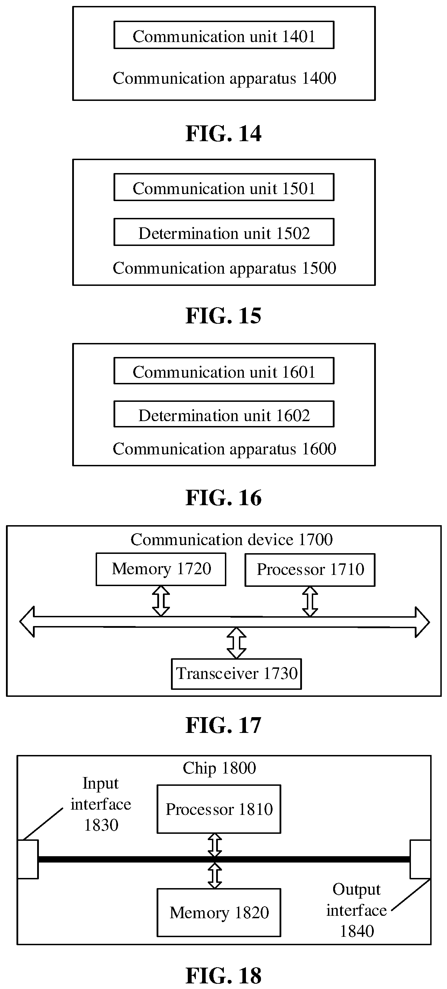

FIG. 14 is a schematic diagram of structural composition of another communication apparatus provided in an embodiment of the disclosure. The communication apparatus is applied to a first network element, and as illustrated in FIG. 14, the communication apparatus 1400 includes a communication unit 1401.

The communication unit 1401 is used to receive, from a second network element or a third network element, a terminal device identification, and identification information of at least one electronic tag and/or an operation request for the at least one electronic tag.

The communication unit 1401 is further used to send, to a terminal device corresponding to the terminal device identification, the operation request and/or the identification information of the at least one electronic tag.

In some embodiments, the communication apparatus 1400 includes a determination unit, the determination unit is used to determine the terminal device corresponding to the terminal device identification.

In some embodiments, the operation request is used to obtain relevant information of the at least one electronic tag.

In some embodiments, the communication unit 1401 is further used to: receive, from the terminal device, the relevant information of the at least one electronic tag; and send, to the second network element or the third network element, the relevant information of the at least one electronic tag.

In some embodiments, the relevant information includes at least one of: the identification information, position information, status information, timestamp information added by the terminal device, stored information, or information determined based on the stored information.

In some embodiments, the position information includes at least one of: absolute position information, relative position information relative to the terminal device, or position information of a located area.

In some embodiments, the operation request is used to request at least one of: writing information into the at least one electronic tag, deleting at least part of information in the at least one electronic tag, or modifying at least part of information in the at least one electronic tag.

In some embodiments, the operation request includes at least one of: information to be written, information to be deleted, information to be modified, modified information, a type of information to be written, a type of information to be deleted, a type of information to be modified, or a type of modified information.

The operation of writing the information into the at least one electronic tag includes: writing the information to be written and/or information corresponding to the type of information to be written into the at least one electronic tag.

The operation of deleting the at least part of information in the at least one electronic tag includes: deleting the information to be deleted and/or information corresponding to the type of information to be deleted in the at least one electronic tag.

The operation of modifying the at least part of information in the at least one electronic tag includes: deleting the information to be modified and/or information corresponding to the type of information to be modified in the at least one electronic tag, and writing the modified information and/or information corresponding to the type of modified information into the at least one electronic tag.

In some embodiments, the communication unit 1401 is further used to: receive, from the terminal device, a response message, the response message including the identification information of the at least one electronic tag and/or at least one of: indication information of success or failure in writing the information into the at least one electronic tag, indication information of success or failure in deleting the at least part of information in the at least one electronic tag, or indication information of success or failure in modifying the at least part of information in the at least one electronic tag; and send, to the second network element or the third network element, the response message.

In some embodiments, the communication unit 1401 is further used to: receive, from the terminal device, identification information of one or more electronic tags; and send, to the second network element or the third network element, the terminal device identification, and the identification information of the one or more electronic tags associated with the terminal device.

In some embodiments, the identification information includes an EPC.

FIG. 15 is a schematic diagram of structural composition of yet another communication apparatus provided in an embodiment of the disclosure. The communication apparatus is applied to a second network element, and as illustrated in FIG. 15, the communication apparatus 1500 includes a communication unit 1501 and a determination unit 1502.

The communication unit 1501 is used to receive, from a third network element, identification information of at least one electronic tag and/or an operation request for the at least one electronic tag.

The determination unit 1502 is used to determine a terminal device associated with the at least one electronic tag.

In some embodiments, the communication unit 1501 is further used to: send, to a first network element serving the terminal device, a terminal device identification associated with the identification information of the at least one electronic tag, and the operation request and/or the identification information of the at least one electronic tag.

In some embodiments, the communication unit 1501 is further used to: send, to the third network element, the terminal device identification associated with the identification information of the at least one electronic tag.

In some embodiments, the operation request is used to obtain relevant information of the at least one electronic tag.

In some embodiments, the relevant information includes at least one of: the identification information, position information, status information, timestamp information added by the terminal device, stored information, or information determined based on the stored information.

In some embodiments, the position information includes at least one of: absolute position information, relative position information relative to the terminal device, or position information of a located area.

In some embodiments, the operation request is used to request at least one of: writing information into the at least one electronic tag, deleting at least part of information in the at least one electronic tag, or modifying at least part of information in the at least one electronic tag.

In some embodiments, the operation request includes at least one of: information to be written, information to be deleted, information to be modified, modified information, a type of information to be written, a type of information to be deleted, a type of information to be modified, or a type of modified information.

The operation of writing the information into the at least one electronic tag includes: writing the information to be written and/or information corresponding to the type of information to be written into the at least one electronic tag.

The operation of deleting the at least part of information in the at least one electronic tag includes: deleting the information to be deleted and/or information corresponding to the type of information to be deleted in the at least one electronic tag.

The operation of modifying the at least part of information in the at least one electronic tag includes: deleting the information to be modified and/or information corresponding to the type of information to be modified in the at least one electronic tag, and writing the modified information and/or information corresponding to the type of modified information into the at least one electronic tag.

In some embodiments, the communication unit 1501 is further used to: receive, from a first network element serving the terminal device, the terminal device identification, and identification information of one or more electronic tags associated with the terminal device.

The communication apparatus 1500 further includes a storage unit, used to store the terminal device identification, and the identification information of the one or more electronic tags associated with the terminal device.

In some embodiments, the identification information includes an EPC.

FIG. 16 is a schematic diagram of structural composition of still yet another communication apparatus provided in an embodiment of the disclosure. The communication apparatus is applied to a third network element, and as illustrated in FIG. 16, the communication apparatus 1600 includes a communication unit 1601.

The communication unit 1601 is used to receive identification information of at least one electronic tag and/or an operation request for the at least one electronic tag from an AF entity.

The communication unit 1601 is further used to send the operation request and/or the identification information of the at least one electronic tag to a second network element; or the communication apparatus further includes a determination unit 1602, used to determine a terminal device associated with the at least one electronic tag.

In some embodiments, the communication unit 1601 is further used to: send, to a first network element serving the terminal device, a terminal device identification associated with the identification information of the at least one electronic tag, and the operation request and/or the identification information of the at least one electronic tag.

In some embodiments, the determination unit 1602 is further used to: determine the terminal device identification based on stored terminal device identifications and identification information of one or more electronic tags associated with the terminal device.

In some embodiments, the communication unit 1601 is further used to: send, to the second network element, the identification information of the at least one electronic tag, and receive the terminal device identification from the second network element.

In some embodiments, the operation request is used to obtain relevant information of the at least one electronic tag.

In some embodiments, the communication unit 1601 is further used to: receive, from a first network element serving the terminal device, relevant information of the at least one electronic tag, and send, to the AF entity, the relevant information of the at least one electronic tag; or the determination unit 1602 is further used to: process the relevant information of the at least one electronic tag to obtain target information, and the communication unit 1601 is further used to send, to the AF entity, the target information.

In some embodiments, the relevant information of the at least one electronic tag includes relative position information of the at least one electronic tag relative to the terminal device; and the target information includes absolute position information of the at least one electronic tag.

The determination unit 1602 is further used to: determines the absolute position information of the at least one electronic tag based on the relative position information of the at least one electronic tag relative to the terminal device and absolute position information of the terminal device.

In some embodiments, the relevant information includes at least one of: the identification information, position information, status information, timestamp information added by the terminal device, stored information, or information determined based on the stored information.

In some embodiments, the position information includes at least one of: absolute position information, relative position information relative to the terminal device, or position information of a located area.

In some embodiments, the operation request is used to request at least one of: writing information into the at least one electronic tag, deleting at least part of information in the at least one electronic tag, or modifying at least part of information in the at least one electronic tag.

In some embodiments, the operation request includes at least one of: information to be written, information to be deleted, information to be modified, modified information, a type of information to be written, a type of information to be deleted, a type of information to be modified, or a type of modified information.

The operation of writing the information into the at least one electronic tag includes: writing the information to be written and/or information corresponding to the type of information to be written into the at least one electronic tag.

The operation of deleting the at least part of information in the at least one electronic tag includes: deleting the information to be deleted and/or information corresponding to the type of information to be deleted in the at least one electronic tag.

The operation of modifying the at least part of information in the at least one electronic tag includes: deleting the information to be modified and/or information corresponding to the type of information to be modified in the at least one electronic tag, and writing the modified information and/or information corresponding to the type of modified information into the at least one electronic tag.

In some embodiments, the communication unit 1601 is further used to: receive, from the first network element serving the terminal device, a response message. The response message includes the identification information of the at least one electronic tag and/or at least one of: indication information of success or failure in writing the information into the at least one electronic tag, indication information of success or failure in deleting the at least part of information in the at least one electronic tag, or indication information of success or failure in modifying the at least part of information in the at least one electronic tag.

In some embodiments, the communication unit 1601 is further used to: receive, from the first network element serving the terminal device, a terminal device identification, and the identification information of the one or more electronic tags associated with the terminal device.

The communication apparatus 1600 further includes a storage unit, used to store the terminal device identification, and the identification information of the one or more electronic tags associated with the terminal device.

In some embodiments, the identification information includes an EPC.

It should be understood by a person of ordinary skill in the art that the relevant description of the above communication apparatus in the embodiments of the disclosure may be understood with reference to relevant description of the communication method in the embodiments of the disclosure.

FIG. 17 is a schematic structural diagram of a communication device provided in an embodiment of the present disclosure. The communication device 1700 may include one of a terminal device, a first network element, a second network element, or a third network element. The communication device 1700 illustrated in FIG. 17 may include a processor 1710 and a memory 1720. The memory 1720 stores a computer program executable on the processor 1710 and causing the processor 1710 to perform the communication method in any of the above embodiments when being executed by the processor.

Optionally, the memory 1720 may be a separate device independent from the processor 1710, or may be integrated in the processor 1710.

In some embodiments, as illustrated in FIG. 17, the communication device 1700 may further include a transceiver 1730. The processor 1710 may control the transceiver 1730 to communicate with other devices, specifically, to send information or data to other devices, or receive information or data from other devices.

The transceiver 1730 may include a transmitter and a receiver. The transceiver 1730 may further include an antenna, and there may be one or more antennas.

There is provided a computer storage medium in an embodiment of the present disclosure, the computer storage medium stores one or more programs executable by one or more processors that, when executing the one or more programs, perform the communication method in any of the embodiments in the disclosure

In some embodiments, the computer-readable storage medium may be applied to the terminal device, the first network element, the second network element, or the third network element in the embodiments of the disclosure, and the computer program, when being run on a computer, causes the computer to perform corresponding flows that are performed by the terminal device, the first network element, the second network element, or the third network element in various methods of the embodiments of the disclosure. For brevity, details are not elaborated herein again.

FIG. 18 is a schematic structural diagram of a chip of an embodiment of the disclosure. The chip 1800 illustrated in FIG. 18 includes a processor 1810. The processor 1810 calls a computer program stored in a memory and run the computer program to perform the method according to any of the embodiments of the disclosure.

In some embodiments, as illustrated in FIG. 18, the chip 1800 may further include a memory 1820. The processor 1810 may call the computer program stored in the memory 1820 and run the computer program to perform the method according to the embodiments of the disclosure.

The memory 1820 may be a separate device independent from the processor 1810, or may be integrated in the processor 1810.

In some embodiments, the chip 1800 may further include an input interface 1830. The processor 1810 may control the input interface 1830 to communicate with other devices or chips, specifically, to obtain information or data from other devices or chips.

In some embodiments, the chip 1800 may further include an output interface 1840. The processor 1810 may control the output interface 1840 to communicate with other devices or chips, specifically, to output information or data to other devices or chips.

In some embodiments, the chip may be applied to the terminal device, the first network element, the second network element, or the third network element in the embodiments of the disclosure, and the chip may cause the computer to perform corresponding flows that are performed by the terminal device, the first network element, the second network element, or the third network element in various methods of the embodiments of the disclosure. For brevity, details are not elaborated herein again.

It should be understood that, the chip mentioned in the embodiments of the disclosure may be also referred to as a system-level chip, a system chip, a chip system or a chip of a system on chip, etc.

There is provided a computer program product in an embodiment of the present disclosure. The computer program product includes a computer storage medium storing a computer program. The computer program includes instructions executable by at least one processor that, when executing the instructions, perform the communication method in any of the embodiments of the disclosure.

In some embodiments, the computer program product may be applied to the terminal device, the first network element, the second network element, or the third network element in the embodiments of the disclosure, and computer program instructions, when being run on a computer, cause the computer to perform corresponding flows that are performed by the terminal device, the first network element, the second network element, or the third network element in various methods of the embodiments of the disclosure. For brevity, details are not elaborated herein again.

Optionally, the computer program product in the embodiment of the disclosure may also be referred to as a software product in some other embodiments.

There is provided a computer program in an embodiment of the present disclosure, the computer program causes a computer to perform the communication method in any of the embodiments in the disclosure

In some embodiments, the computer program may be applied to the terminal device, the first network element, the second network element, or the third network element in the embodiments of the disclosure, and computer program, when being run on a computer, causes the computer to perform corresponding flows that are performed by the terminal device, the first network element, the second network element, or the third network element in various methods of the embodiments of the disclosure. For brevity, details are not elaborated herein again.

The processor, the communication apparatus, or the chip in the embodiments of the disclosure may be an integrated circuit chip having a signal processing capability. During implementation, the steps of the foregoing method embodiments may be implemented by using a hardware integrated logic circuit in the processor or implemented by using instructions in a software form. The processor, the communication apparatus, or the chip described above may include an integration of any one or more of: a general purpose processor, an application specific integrated circuit (ASIC), a digital signal processor (DSP), a digital signal processing device (DSPD), a programmable logic device (PLD), a field programmable gate array (FPGA), a central processing unit (CPU), a graphics processing unit (GPU), a embedded neural-network processing units (NPU), a controller, a microcontroller, a microprocessor, a programmable logic device, a discrete gate or a transistor logic device, or a discrete hardware component. The processor may implement or perform methods, steps and logical block diagrams disclosed in the embodiments of the disclosure. The general-purpose processor may be a microprocessor or the processor may be any conventional processor and the like. Steps of the methods disclosed with reference to the embodiments of the disclosure may be directly executed and completed by means of a hardware decoding processor, or may be executed and completed by using a combination of hardware and software module in the decoding processor. The software module may be located in a mature storage medium in the field, such as an RAM, a flash memory, an ROM, a PROM, an electrically-erasable programmable memory, or a register. The storage medium is located in the memory, and the processor reads information in the memory and completes the steps in the foregoing methods in combination with hardware of the processor.

It can be understood that, the memory or the computer storage medium in the embodiments of the disclosure may be a volatile memory or a non-volatile memory, or may include both a volatile memory and a non-volatile memory. The non-volatile memory may be an ROM, a PROM, an EPROM, an EEPROM or a flash memory. The volatile memory may be an RAM and is used as an external cache. By way of illustration, but not limitation, many forms of RAMs may be used, for example, a static RAM (SRAM), a dynamic RAM (DRAM), a synchronous DDRAM (SDRAM), a double data rate SDRAM (DDR SDRAM), an enhanced SDRAM (ESDRAM), a synchlink DRAM (SLDRAM) and a direct rambus RAM (DR RAM). It should be noted that, the memory of the system and the method described herein aims to include but not be limited to these memories and any other suitable types of memories.

It should be understood that, the foregoing memory or the computer storage medium is exemplary but not limited description, for example, the memory in the embodiments of the disclosure may be an SRAM, a DRAM, an SDRAM, a DDR SDRAM, an ESDRAM, an SLDRAM and a DR RAM, etc. It should be noted that, the memory in the embodiments of the disclosure aims to include but not be limited to these memories and any other suitable types of memories.

A person of ordinary skill in the art may be aware that, units and algorithm steps of various examples described in combination with the embodiments disclosed herein may be implemented by electronic hardware, or a combination of computer software and electronic hardware. Whether the functions are performed by hardware or software depends on particular applications and design constraint conditions of the technical solutions. Those skilled in the art may use different methods to implement the described functions for each particular application, and such implementations should not be considered to go beyond the scope of this application.

It may be clearly understood by those skilled in the art that, for the purpose of convenient and brief description, the detailed working process of the foregoing system, apparatus, and units may refer to the corresponding process in the foregoing method embodiments, and details are not described herein again.

In the several embodiments provided in this disclosure, it should be understood that the disclosed system, device, and method may be implemented in other manners. For example, the described apparatus embodiments are merely exemplary. For example, the unit division is merely a logical function division and there may be other divisions in actual implementation. For example, multiple units or components may be combined or integrated into another system, or some features may be ignored or not performed. In addition, the displayed or discussed mutual coupling or direct coupling or communication connections may be an indirect coupling or communication connection implemented through some interfaces, apparatuses or units may be implemented in electrical, mechanical or other forms.

The units described as separate parts may be or may not be physically separate, and parts displayed as units may be or may not be physical units, they may be located in one place, or may be distributed on multiple network units. Some or all of the units may be selected according to actual needs to achieve the objectives of the solutions of the embodiments.

In addition, functional units in the embodiments of this disclosure may be integrated into one processing unit, or each of the units may exist physically and separately, or two or more units are integrated into one unit.

In any of the embodiments of the disclosure, a time interval, a time period, a time range, a duration, a time window, etc. may include all of the endpoint times, or may include part of the endpoint times (for example, including the left endpoint time but not including the right endpoint time, or including the right endpoint time but not including the left endpoint time), or may not include the endpoint time.

When the functions are implemented in form of a software functional module and sold or used as an independent product, the functions may be stored in a computer-readable storage medium. Based on such an understanding, the technical solutions of this application essentially, or the part contributing to the prior art, or part of the technical solutions may be implemented in the form of a software product. The computer software product is stored in a storage medium, and includes several instructions for instructing a computer device (which may be a personal computer, a server, a network device, and the like) to perform all or a part of the steps of the method described in the embodiment of the disclosure. The foregoing storage medium includes: any medium that can store program codes, such as a USB flash disk, a removable hard disk, an ROM, an RAM, a magnetic disk, or an optical disk.

The foregoing descriptions are merely specific implementations of this disclosure, but are not intended to limit the scope of protection of this disclosure. Any variation or replacement readily figured out by a person skilled in the art within the technical scope disclosed in this disclosure shall fall within the scope of protection of this disclosure. Therefore, the scope of protection of this disclosure shall be subject to the scope of protection of the claims.

## Claims

1. A communication method, comprising:
receiving, by a terminal device from a first network element, identification information of at least one electronic tag and/or an operation request for the at least one electronic tag; and
performing, by the terminal device, an operation on the at least one electronic tag.

2. The method of claim 1, wherein the operation request is used to obtain relevant information of the at least one electronic tag; and
performing, by the terminal device, the operation on the at least one electronic tag comprises:
obtaining, by the terminal device, the relevant information of the at least one electronic tag.

3. The method of claim 2, further comprising:
sending, by the terminal device to the first network element, the relevant information of the at least one electronic tag.

4. The method of claim 2 or 3, further comprising: obtaining, by the terminal device, relevant information of one or more electronic tags, wherein
obtaining, by the terminal device, the relevant information of the at least one electronic tag comprises: determining, by the terminal device, the relevant information of the at least one electronic tag from the relevant information of the one or more electronic tags.

5. The method of any one of claims 2 to 4, wherein the relevant information comprises at least one of: the identification information, position information, status information, timestamp information added by the terminal device, stored information, or information determined based on the stored information.

6. The method of claim 5, wherein the position information comprises at least one of: absolute position information, relative position information relative to the terminal device, or position information of a located area.

7. The method of claim 1, wherein the operation request is used to request at least one of: writing information into the at least one electronic tag, deleting at least part of information in the at least one electronic tag, or modifying at least part of information in the at least one electronic tag; and
performing, by the terminal device, the operation on the at least one electronic tag comprises at least one of:
writing, by the terminal device, the information into the at least one electronic tag;
deleting, by the terminal device, the at least part of information in the at least one electronic tag; or
modifying, by the terminal device, the at least part of information in the at least one electronic tag.

8. The method of claim 7, wherein the operation request comprises at least one of: information to be written, information to be deleted, information to be modified, modified information, a type of information to be written, a type of information to be deleted, a type of information to be modified, or a type of modified information;
writing the information into the at least one electronic tag comprises: writing the information to be written and/or information corresponding to the type of information to be written into the at least one electronic tag;
deleting the at least part of information in the at least one electronic tag comprises: deleting the information to be deleted and/or information corresponding to the type of information to be deleted in the at least one electronic tag; and
modifying the at least part of information in the at least one electronic tag comprises: deleting the information to be modified and/or information corresponding to the type of information to be modified in the at least one electronic tag, and writing the modified information and/or information corresponding to the type of modified information into the at least one electronic tag.

9. The method of claim 7 or 8, further comprising:
sending, by the terminal device to the first network element, a response message, wherein the response message comprises the identification information of the at least one electronic tag and/or at least one of: indication information of success or failure in writing the information into the at least one electronic tag, indication information of success or failure in deleting the at least part of information in the at least one electronic tag, or indication information of success or failure in modifying the at least part of information in the at least one electronic tag.

10. The method of any one of claims 1 to 9, wherein before receiving, by the terminal device from the first network element, the identification information of the at least one electronic tag and/or the operation request for the at least one electronic tag, the method comprises:
obtaining, by the terminal device, identification information of one or more electronic tags; and
sending, by the terminal device to the first network element, the identification information of the one or more electronic tags.

11. The method of any one of claims 1 to 10, wherein the identification information comprises an electronic product code (EPC).

12. A communication method, comprising:
receiving, by a first network element from a second network element or a third network element, a terminal device identification, and identification information of at least one electronic tag and/or an operation request for the at least one electronic tag; and
sending, by the first network element to a terminal device corresponding to the terminal device identification, the operation request and/or the identification information of the at least one electronic tag.

13. The method of claim 12, wherein the operation request is used to obtain relevant information of the at least one electronic tag.

14. The method of claim 13, further comprising:
receiving, by the first network element from the terminal device, the relevant information of the at least one electronic tag; and
sending, by the first network element to the second network element or the third network element, the relevant information of the at least one electronic tag.

15. The method of claim 13 or 14, wherein the relevant information comprises at least one of: the identification information, position information, status information, timestamp information added by the terminal device, stored information, or information determined based on the stored information.

16. The method of claim 15, wherein the position information comprises at least one of: absolute position information, relative position information relative to the terminal device, or position information of a located area.

17. The method of claim 12, wherein the operation request is used to request at least one of: writing information into the at least one electronic tag, deleting at least part of information in the at least one electronic tag, or modifying at least part of information in the at least one electronic tag.

18. The method of claim 17, wherein the operation request comprises at least one of: information to be written, information to be deleted, information to be modified, modified information, a type of information to be written, a type of information to be deleted, a type of information to be modified, or a type of modified information;
writing the information into the at least one electronic tag comprises: writing the information to be written and/or information corresponding to the type of information to be written into the at least one electronic tag;
deleting the at least part of information in the at least one electronic tag comprises: deleting the information to be deleted and/or information corresponding to the type of information to be deleted in the at least one electronic tag; and
modifying the at least part of information in the at least one electronic tag comprises: deleting the information to be modified and/or information corresponding to the type of information to be modified in the at least one electronic tag, and writing the modified information and/or information corresponding to the type of modified information into the at least one electronic tag.

19. The method of claim 17 or 18, further comprising:
receiving, by the first network element from the terminal device, a response message, wherein the response message comprises the identification information of the at least one electronic tag and/or at least one of: indication information of success or failure in writing the information into the at least one electronic tag, indication information of success or failure in deleting the at least part of information in the at least one electronic tag, or indication information of success or failure in modifying the at least part of information in the at least one electronic tag.
sending, by the first network element to the second network element or the third network element, the response message.

20. The method of any one of claims 12 to 19, wherein before receiving, by the first network element from the second network element or the third network element, the terminal device identification, and the identification information of the at least one electronic tag and/or the operation request for the at least one electronic tag, the method comprises:
receiving, by the first network element from the terminal device, identification information of one or more electronic tags; and
sending, by the first network element to the second network element or the third network element, the terminal device identification, and the identification information of the one or more electronic tags associated with the terminal device.

21. The method of any one of claims 12 to 20, wherein the identification information comprises an electronic product code (EPC).

22. A communication method, comprising:
receiving, by a second network element from a third network element, identification information of at least one electronic tag and/or an operation request for the at least one electronic tag; and
determining, by the second network element, a terminal device associated with the at least one electronic tag.

23. The method of claim 22, further comprising:
sending, by the second network element to a first network element serving the terminal device, a terminal device identification associated with the identification information of the at least one electronic tag, and the operation request and/or the identification information of the at least one electronic tag.

24. The method of claim 22, further comprising:
sending, by the second network element to the third network element, a terminal device identification associated with the identification information of the at least one electronic tag.

25. The method of any one of claims 22 to 24, wherein the operation request is used to obtain relevant information of the at least one electronic tag.

26. The method of claim 25, wherein the relevant information comprises at least one of: the identification information, position information, status information, timestamp information added by the terminal device, stored information, or information determined based on the stored information.

27. The method of claim 26, wherein the position information comprises at least one of: absolute position information, relative position information relative to the terminal device, or position information of a located area.

28. The method of any one of claims 22 to 24, wherein the operation request is used to request at least one of: writing information into the at least one electronic tag, deleting at least part of information in the at least one electronic tag, or modifying at least part of information in the at least one electronic tag.

29. The method of claim 28, wherein the operation request comprises at least one of: information to be written, information to be deleted, information to be modified, modified information, a type of information to be written, a type of information to be deleted, a type of information to be modified, or a type of modified information;
writing the information into the at least one electronic tag comprises: writing the information to be written and/or information corresponding to the type of information to be written into the at least one electronic tag;
deleting the at least part of information in the at least one electronic tag comprises: deleting the information to be deleted and/or information corresponding to the type of information to be deleted in the at least one electronic tag; and
modifying the at least part of information in the at least one electronic tag comprises: deleting the information to be modified and/or information corresponding to the type of information to be modified in the at least one electronic tag, and writing the modified information and/or information corresponding to the type of modified information into the at least one electronic tag.

30. The method of any one of claims 22 to 29, wherein before receiving, by the second network element from the third network element, the identification information of the at least one electronic tag and/or the operation request for the at least one electronic tag, the method comprises:
receiving, by the second network element from a first network element serving the terminal device, a terminal device identification, and identification information of one or more electronic tags associated with the terminal device; and
storing, by the second network element, the terminal device identification, and the identification information of the one or more electronic tags associated with the terminal device.

31. The method of any one of claims 22 to 30, wherein the identification information comprises an electronic product code (EPC).

32. A communication method, comprising:
receiving, by a third network element from an application function (AF) entity, identification information of at least one electronic tag and/or an operation request for the at least one electronic tag; and
sending, by the third network element to a second network element, the operation request and/or the identification information of the at least one electronic tag, or determining, by the third network element, a terminal device associated with the at least one electronic tag.

33. The method of claim 32, wherein after determining, by the third network element, the terminal device associated with the at least one electronic tag, the method comprises:
sending, by the third network element to a first network element serving the terminal device, a terminal device identification associated with the identification information of the at least one electronic tag, and the operation request and/or the identification information of the at least one electronic tag.

34. The method of claim 32 or 33, wherein determining, by the third network element, the terminal device associated with the at least one electronic tag comprises:
determining, by the third network element, a terminal device identification based on stored terminal device identifications and identification information of one or more electronic tags associated with the terminal device; or
sending, by the third network element to the second network element, the identification information of the at least one electronic tag, and receiving, by the third network element from the second network element, the terminal device identification.

35. The method of any one of claims 32 to 34, wherein the operation request is used to obtain relevant information of the at least one electronic tag.

36. The method of any one of claims 32 to 35, further comprising:
receiving, by the third network element from a first network element serving the terminal device, relevant information of the at least one electronic tag; and
sending, by the third network element to the AF entity, the relevant information of the at least one electronic tag; or processing, by the third network element, the relevant information of the at least one electronic tag to obtain target information, and sending, by the third network element to the AF entity, the target information.

37. The method of claim 36, wherein the relevant information of the at least one electronic tag comprises relative position information of the at least one electronic tag relative to the terminal device; and the target information comprises absolute position information of the at least one electronic tag; and
processing, by the third network element, the relevant information of the at least one electronic tag to obtain the target information comprises:
determining, by the third network element, the absolute position information of the at least one electronic tag based on the relative position information of the at least one electronic tag relative to the terminal device and absolute position information of the terminal device.

38. The method of claim 35 or 36, wherein the relevant information comprises at least one of: the identification information, position information, status information, timestamp information added by the terminal device, stored information, or information determined based on the stored information.

39. The method of claim 38, wherein the position information comprises at least one of: absolute position information, relative position information relative to the terminal device, or position information of a located area.

40. The method of any one of claims 32 to 34, wherein the operation request is used to request at least one of: writing information into the at least one electronic tag, deleting at least part of information in the at least one electronic tag, or modifying at least part of information in the at least one electronic tag.

41. The method of claim 40, wherein the operation request comprises at least one of: information to be written, information to be deleted, information to be modified, modified information, a type of information to be written, a type of information to be deleted, a type of information to be modified, or a type of modified information;
writing the information into the at least one electronic tag comprises: writing the information to be written and/or information corresponding to the type of information to be written into the at least one electronic tag;
deleting the at least part of information in the at least one electronic tag comprises: deleting the information to be deleted and/or information corresponding to the type of information to be deleted in the at least one electronic tag; and
modifying the at least part of information in the at least one electronic tag comprises: deleting the information to be modified and/or information corresponding to the type of information to be modified in the at least one electronic tag, and writing the modified information and/or information corresponding to the type of modified information into the at least one electronic tag.

42. The method of claim 40 or 41, further comprising:
receiving, by the third network element from a first network element serving the terminal device, a response message, wherein the response message comprises the identification information of the at least one electronic tag and/or at least one of: indication information of success or failure in writing the information into the at least one electronic tag, indication information of success or failure in deleting the at least part of information in the at least one electronic tag, or indication information of success or failure in modifying the at least part of information in the at least one electronic tag,
sending, by the third network element to the AF entity, the response message.

43. The method of any one of claims 32 to 42, wherein before receiving, by the third network element from the AF entity, the identification information of the at least one electronic tag and/or the operation request for the at least one electronic tag, the method comprises:
receiving, by the third network element from a first network element serving the terminal device, a terminal device identification, and identification information of one or more electronic tags associated with the terminal device; and
storing, by the third network element, the terminal device identification, and the identification information of the one or more electronic tags associated with the terminal device.

44. The method of any one of claims 32 to 43, wherein the identification information comprises an electronic product code (EPC).

45. A communication apparatus, comprising: a communication unit, used to receive identification information of at least one electronic tag and/or an operation request for the at least one electronic tag from a first network element; and a performing unit, used to perform an operation on the at least one electronic tag.

46. A communication apparatus, comprising: a communication unit, used to receive a terminal device identification, and identification information of at least one electronic tag and/or an operation request for the at least one electronic tag from a second network element and a third network element, and send the operation request and/or the identification information of the at least one electronic tag to a terminal device corresponding to the terminal device identification.

47. A communication apparatus, comprising: a communication unit, used to receive identification information of at least one electronic tag and/or an operation request for the at least one electronic tag from a third network element; and a determination unit, used to determine a terminal device associated with the at least one electronic tag.

48. A communication apparatus, comprising:
a communication unit, used to receive identification information of at least one electronic tag and/or an operation request for the at least one electronic tag from an application function (AF) entity; and wherein
the communication unit is further used to send the operation request and/or the identification information of the at least one electronic tag to a second network element; or the communication apparatus further comprises a determination unit, used to determine a terminal device associated with the at least one electronic tag.

49. A communication device, comprising a processor and a memory, wherein a computer program executable by the processor is stored on the memory, and the processor, when executing the computer program, performs the method of any one of claims 1 to 11, or the method of any one of claims 12 to 21, or the method of any one of claims 22 to 31, or the method of any one of claims 32 to 44.

50. A computer storage medium, storing one or more programs executable by one or more processors that, when executing the one or more programs, perform the method of any one of claims 1 to 11, or the method of any one of claims 12 to 21, or the method of any one of claims 22 to 31, or the method of any one of claims 32 to 44.

51. A chip, comprising a processor used to call a computer program from a memory and run the computer program, to perform the method of any one of claims 1 to 11, or the method of any one of claims 12 to 21, or the method of any one of claims 22 to 31, or the method of any one of claims 32 to 44.

52. A computer program product, comprising a computer storage medium storing a computer program, wherein the computer program comprises instructions executable by at least one processor that, when executing the instructions, performs the method of any one of claims 1 to 11, or the method of any one of claims 12 to 21, or the method of any one of claims 22 to 31, or the method of any one of claims 32 to 44.

53. A computer program, wherein the computer program causes a computer to perform the method of any one of claims 1 to 11, or the method of any one of claims 12 to 21, or the method of any one of claims 22 to 31, or the method of any one of claims 32 to 44.
